# EUROPEAN PATENT APPLICATION

(11) **EP 3 993 126 A1**
(43) Date of publication of application: **04.05.2022**
(21) Application number: 20837378.7
(22) Date of filing: 08.07.2020
(51) Int. Cl.: H01M 10/0567, H01M 10/052, H01M 10/054, H01M 10/0568, H01M 10/0569

(54) **NONAQUEOUS ELECTROLYTE SOLUTION AND NONAQUEOUS ELECTROLYTE BATTERY USING SAME**

(30) Priority: 08.07.2019 JP 2019126580
(71) Applicant: Central Glass Co., Ltd., Yamaguchi 755-0001 (JP)
(72) Inventor: KAWABATA, Wataru, Ube-shi, Yamaguchi 755-0001 (JP); TAKAHASHI, Mikihiro, Ube-shi, Yamaguchi 755-0001 (JP); MORINAKA, Takayoshi, Ube-shi, Yamaguchi 755-0001 (JP); NAKAHARA, Keita, Ube-shi, Yamaguchi 755-0001 (JP); TANIGAWA, Takahiro, Ube-shi, Yamaguchi 755-0001 (JP)
(74) Representative: Manitz Finsterwald Patent- und Rechtsanwaltspartnerschaft mbB
(86) International application number: PCT/JP2020/026725
(87) International publication number: WO 2021/006302

(57) **Abstract**

The present invention provides a nonaqueous electrolyte battery which has a low internal resistance after the initial charge and discharge, while having excellent low-temperature output characteristics after storage at high temperatures. The present invention contains a compound represented by general formula (1) as a component of a nonaqueous electrolyte solution. In the formula, X¹ represents a carbon atom or a sulfur atom; each of Y¹ and Y² represents an oxygen atom or a methylene group that may be substituted by a halogen atom; r represents 1 or 2; and R¹ represents a group represented by general formula (2) or a group represented by general formula (3), provided that (i) in cases where X¹ is a sulfur atom and Y¹ and Y² are methylene groups and (ii) in cases where X¹ is a carbon atom and Y¹ and Y² are oxygen atoms, R¹ is a group represented by general formula (2).

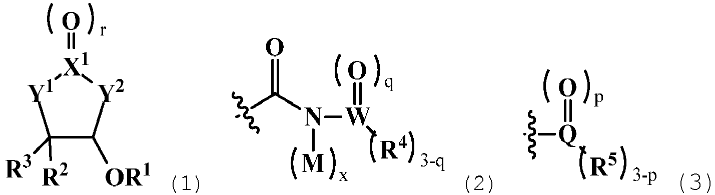

## Description

### Technical field

The present invention relates to a nonaqueous electrolyte solution and a nonaqueous electrolyte battery using the same.

### Background technology

In recent years, there has been rapidly expanded demand for storage systems to be applied to small equipment that needs high energy density, such as information-technology-related equipment or communication equipment, specifically, personal computers, video cameras, digital still cameras, cell phones and smartphones, and batteries that have high capacity, high output and high energy density and can be incorporated as auxiliary power into electric vehicles, hybrid electric vehicles and fuel cell electric vehicles. There has been also increasing demand for batteries that can be used for a long period of time in storage systems to be applied to large equipment that needs high power, such as energy storage. A nonaqueous electrolyte battery such as a lithium ion battery, a lithium battery or a lithium ion capacitor has been actively developed as a candidate of these storage systems.

A lithium secondary battery is formed from mainly a positive electrode, a nonaqueous electrolyte solution and a negative electrode. As the negative electrode to be used in a lithium secondary battery, for example, metal lithium, a metal compound which can occlude and release lithium (such as e.g. elemental metal, its oxide and its alloy with lithium), a carbon material and the like are known, and particularly lithium secondary batteries using a carbon material such as cokes, artificial graphite, or natural graphite, which can occlude and release lithium, have been widely put into practical use. It has been reported that, for example, in lithium secondary batteries using a highly crystallized carbon material such as natural graphite or artificial graphite as a negative electrode material, the nonaqueous organic solvent in the nonaqueous electrolyte solution is reduced and decomposed on the surface of the negative electrode at the time of charge, and the decomposed products and gas thus generated inhibit the inherent electrochemical reaction of the batteries, and thus cycle characteristics are reduced.

In addition, in lithium secondary batteries using e.g. lithium metal or an alloy thereof, or e.g. elemental silicon or tin, or silicon or tin oxide as a negative electrode material, the initial capacity is high but the negative electrode material is micronized during cycles, and thus the nonaqueous organic solvent is easily reduced and decomposed compared to the use of the negative electrodes made of a carbon material. Consequently it is known that the charge and discharge efficiency in the first cycle is reduced associated with an increase in the initial irreversible capacity of the batteries, and battery performance such as battery capacity and cycle characteristics is largely reduced associated with the above reduction.

When the lithium cation is inserted into a negative electrode at the time of charge in the first cycle, the negative electrode and the lithium cation, or the negative electrode and an electrolyte solution solvent react to form a film having lithium oxide, lithium carbonate, or lithium alkyl carbonate as the main component on the negative electrode surface. This film on the electrode surface is called Solid Electrolyte Interface (SEI), and the properties thereof have large influences on battery performance, for example suppressing the reductive decomposition of a solvent and suppressing the deterioration of battery performance.

As described above, lithium cannot be smoothly occluded to and released from the negative electrode due to e.g. adverse influence due to the accumulation of decomposed products of a nonaqueous organic solvent, the generation of gas, and the micronization of a negative electrode material, and consequently there is a problem in that battery characteristics such as cycle characteristics are significantly reduced.

In addition, as the positive electrode, for example, LiCoO₂, LiMn₂O₄, LiNiO₂, LiFePO₄ and the like are known. It has been reported that because, when the temperature is high in the charge state of lithium secondary batteries using them, a part of the nonaqueous organic solvent in the nonaqueous electrolyte solution is locally oxidized and decomposed at the interface between the positive electrode material and the nonaqueous electrolyte solution, the decomposed products and gas generated by the oxidative decomposition inhibit the inherent electrochemical reaction of the batteries, and consequently battery performance such as cycle characteristics is reduced. In the same manner as the negative electrode, a film is formed also on the positive electrode surface from products generated by oxidative decomposition, and it is known that this also suppresses the oxidative decomposition of a solvent, and plays an important role in e.g. suppressing the amount of gas generated.

As described above, ordinal lithium secondary batteries have had cause to inhibit the transfer of a lithium ion due to decomposed products and gas generated when a nonaqueous electrolyte solution is decomposed on the positive electrode and the negative electrode, and cause to reduce battery performance by the expansion of the batteries.

In addition to overcoming these problems, in order to improve battery performance including long-term durability and output characteristics, it is important to form a SEI which has high ion conductivity and low electron conductivity and is stable over a long period of time, and an attempt to positively form a good SEI has been widely made by adding small amounts of compounds called additives to a nonaqueous electrolyte solution (usually 0.01 mass% or more and 10 mass% or less).

Patent Literature 1 describes that an active and highly crystallized carbon material surface is covered with a passive film by adding 0.1 wt% or more and 4 wt% or less of 1,3-propanesultone or 1,4-butanesultone to a nonaqueous organic solvent so as to improve cycle characteristics and storage characteristics of batteries.

Patent Literature 2 and Patent Literature 3 describe that the decomposition reaction of a solvent on a negative electrode is suppressed, a reduction in the capacity of batteries at the time of storage at high temperatures is suppressed, gas generation is suppressed, and the deterioration of load characteristics of batteries is suppressed by using a nonaqueous electrolyte solution containing unsaturated sultone, or a nonaqueous electrolyte solution containing unsaturated sultone and fluorine-substituted ethylene carbonate.

Patent Literature 4 describes an attempt to improve storage characteristics at high temperatures by using a nonaqueous electrolyte solution containing at least one selected from the group consisting of a 1,3,2-dioxathiolane-2,2-dioxide derivative or a 1,3-propanediol cyclic sulfate derivative.

Patent Literature 5 describes that a strong SEI having excellent ion conductivity is formed by using a nonaqueous electrolyte solution containing a cyclic sulfone compound to which a sulfonyloxy group is bound, to be able to improve cycle characteristics of batteries.

### Prior Art References

### Patent Literature

Patent Literature 1: JP-A-2000-003724
Patent Literature 2: JP-A-2002-329528
Patent Literature 3: WO2007/043624
Patent Literature 4: JP-A-2004-185931
Patent Literature 5: US 2017/271715 A1

### Summary of Invention

### Subject to be attained by the invention

Many nonaqueous electrolyte solutions mainly for lithium ion batteries have been already put into practical use. It cannot be said, however, that they are nonaqueous electrolyte solutions having sufficient characteristics to be applied to e.g. vehicles which can be used under more severe conditions.

It cannot be said that resistance characteristics after the initial charge and discharge and low-temperature output characteristics after storage at high temperatures are sufficient in the nonaqueous electrolyte solutions described in Patent Literatures 1 to 5 described above, and further improvements have been demanded.

### Means for attaining the subject

Having carried out intensive studies in view of the above circumstances, the present inventors have found that a nonaqueous electrolyte battery which has a low internal resistance after the initial charge and discharge, while having excellent low-temperature output characteristics after storage at high temperatures, was obtained by causing the nonaqueous electrolyte solution to contain the specific compound represented by the formula (1) which will be further explained below, thereby having completed the present invention.

That is, the present inventors have found that the present subject to be attained could be attained by the following constitutions.

A nonaqueous electrolyte solution, comprising a compound represented by the general formula (1) below, a solute, and a nonaqueous organic solvent:

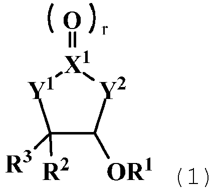

[In general formula (1),
X¹ represents a carbon atom or sulfur atom,
Y¹ and Y² represent oxygen atoms or methylene groups which may be substituted by a halogen atom,
r represents 1 in the case where X¹ represents a carbon atom, 1 in the case where X¹ represents a sulfur atom, and Y¹ and Y² represent oxygen atoms, and 2 in the other cases,
R¹ represents a group represented by general formula (2) below or a group represented by the general formula (3) below, provided that (i) in the case where X¹ represents a sulfur atom and Y¹ and Y² represent methylene groups, and (ii) in the case where X¹ represents a carbon atom and Y¹ and Y² represent oxygen atoms, R¹ represents a group represented by the general formula (2), and
R² and R³ each independently represents a hydrogen atom, a halogen atom, an alkyl group having 1-20 carbon atoms which may be substituted by a halogen atom, an alkenyl group having 2-20 carbon atoms which may be substituted by a halogen atom, an alkynyl group having 2-20 carbon atoms which may be substituted by a halogen atom, an alkoxy group having 1-20 carbon atoms which may be substituted by a halogen atom, a cycloalkoxy group having 5-20 carbon atoms which may be substituted by a halogen atom, an aryl group having 6-40 carbon atoms which may be substituted by a halogen atom, or a heteroaryl group having 2-40 carbon atoms which may be substituted by a halogen atom.] 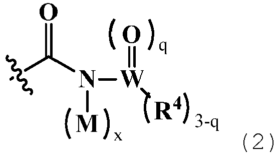
[In the general formula (2),
M represents a hydrogen atom, an alkali metal ion, an alkaline earth metal ion, or a monovalent or divalent onium ion, and in the case where M represents an alkali metal ion, an alkaline earth metal ion, or a monovalent or divalent onium ion, the bond between the nitrogen atom and M in the general formula (2) is an ionic bond,
x represents 1 in the case where M represents a hydrogen atom, an alkali metal ion, or a monovalent onium ion, and 0.5 in the case where M represents an alkaline earth metal ion or a divalent onium ion,
W represents a phosphorus atom or a sulfur atom,
q represents 1 in the case where W represents a phosphorus atom, and 2 in the case where W represents a sulfur atom,
R⁴ represents a halogen atom, an alkyl group having 1-20 carbon atoms which may be substituted by a halogen atom or FSO₂ group, a cycloalkyl group having 5-20 carbon atoms which may be substituted by a halogen atom or FSO₂ group, an alkenyl group having 2-20 carbon atoms which may be substituted by a halogen atom or FSO₂ group, an alkynyl group having 2-20 carbon atoms which may be substituted by a halogen atom or FSO₂ group, an aryl group having 6-40 carbon atoms which may be substituted by a halogen atom or FSO₂ group, a heteroaryl group having 2-40 carbon atoms which may be substituted by a halogen atom or FSO₂ group, an alkoxy group having 1-20 carbon atoms which may be substituted by a halogen atom or FSO₂ group, a cycloalkoxy group having 5-20 carbon atoms which may be substituted by a halogen atom or FSO₂ group, an alkenyloxy group having 2-20 carbon atoms which may be substituted by a halogen atom or FSO₂ group, an alkynyloxy group having 2-20 carbon atoms which may be substituted by a halogen atom or FSO₂ group, an aryloxy group having 6-40 carbon atoms which may be substituted by a halogen atom or FSO₂ group, or a heteroaryloxy group having 2-40 carbon atoms which may be substituted by a halogen atom or FSO₂ group, and
a plurality of R⁴s may be the same or different when q = 1.] 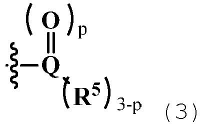
[In the general formula (3),
Q represents a phosphorus atom or a sulfur atom,
p represents 1 in the case where Q represents a phosphorus atom, and 2 in the case where Q represents a sulfur atom,
R⁵ represents a halogen atom,
a plurality of R⁵s may be the same or different when p = 1, and
Q represents a phosphorus atom in the case where, in the general formula (1), X¹ represents a sulfur atom, Y¹ represents an oxygen atom, and Y² represents a methylene group.]

The nonaqueous electrolyte solution according to <1>, wherein, in the general formula (1), X¹ represents a sulfur atom, and Y¹ and Y² represent oxygen atoms or methylene groups.

The nonaqueous electrolyte solution according to <1> or <2>, wherein R¹ in the general formula (1) represents a group represented by the general formula (2), and W in the general formula (2) represents a sulfur atom.

The nonaqueous electrolyte solution according to <1> or <2>, wherein, in the general formula (1), Y¹ represents an oxygen atom, Y² represents a methylene group, R¹ represents a group represented by the general formula (3), and Q in the general formula (3) represents a phosphorus atom.

The nonaqueous electrolyte solution according to any one of <1> to <3>, wherein R¹ in the general formula (1) represents a group represented by the general formula (2), and R⁴ in the general formula (2) represents a fluorine atom, a methyl group, an ethyl group, an n-propyl group, an isopropyl group, an n-butyl group, a tert-butyl group, an n-pentyl group, an n-hexyl group, a trifluoromethyl group, a trifluoroethyl group, an ethenyl group, a 2-propenyl group, a 2-propynyl group, a phenyl group, a naphthyl group, a pentafluorophenyl group, a pyrrolyl group, a pyridinyl group, a methoxy group, an ethoxy group, an n-propoxy group, an isopropoxy group, an n-butoxy group, a tert-butoxy group, an n-pentyloxy group, an n-hexyloxy group, a trifluoromethoxy group, a trifluoroethoxy group, an ethenyloxy group, a 2-propenyloxy group, a 2-propynyloxy group, a phenoxy group, a naphthyloxy group, or a pentafluorophenoxy group.

The nonaqueous electrolyte solution according to any one of <1> to <3> or <5>, wherein R¹ in the general formula (1) represents a group represented by the general formula (2), and M in the general formula (2) represents a hydrogen atom, a lithium cation, a sodium cation, a potassium cation, a tetraalkylammonium cation, or a tetraalkylphosphonium cation.

The nonaqueous electrolyte solution according to <1> or <4>, wherein R¹ in the general formula (1) represents a group represented by the general formula (3), and R⁵ in the general formula (3) represents a fluorine atom.

The nonaqueous electrolyte solution according to any one of <1> to <7>, wherein R² and R³ in the general formula (1) each independently represents a hydrogen atom, a fluorine atom, a methyl group, an ethyl group, an n-propyl group, an isopropyl group, an n-butyl group, a tert-butyl group, a trifluoromethyl group, a tetrafluoroethyl group, a phenyl group, a naphthyl group, a pentafluorophenyl group, a pyrrolyl group, or a pyridinyl group.

The nonaqueous electrolyte solution according to any one of <1> to <8>, wherein the nonaqueous organic solvent comprises at least one selected from the group consisting of a cyclic carbonate and a chain carbonate.

The nonaqueous electrolyte solution according to <9>, wherein the cyclic carbonate is at least one selected from the group consisting of ethylene carbonate, propylene carbonate, and fluoroethylene carbonate, and the chain carbonate is at least one selected from the group consisting of ethylmethyl carbonate, dimethyl carbonate, diethyl carbonate, and methylpropyl carbonate.

The nonaqueous electrolyte solution according to any one of <1> to <10>, wherein the solute is an ionic salt comprising a pair of at least one cation selected from the group consisting of an alkali metal ion and an alkaline earth metal ion, with at least one anion selected from the group consisting of a hexafluorophosphoric acid anion, a tetrafluoroboric acid anion, a trifluoromethanesulfonic acid anion, a fluorosulfonic acid anion, a bis(trifluoromethanesulfonyl)imide anion, a bis(fluorosulfonyl)imide anion, a (trifluoromethanesulfonyl)(fluorosulfonyl)imide anion, a bis(difluorophosphoryl)imide anion, a (difluorophosphoryl)(fluorosulfonyl)imide anion, and a (difluorophosphoryl)(trifluoromethanesulfonyl)imide anion.

The nonaqueous electrolyte solution according to <11>, wherein the cation of the solute is lithium, sodium, potassium, or magnesium, and the anion is at least one selected from the group consisting of a hexafluorophosphoric acid anion, a tetrafluoroboric acid anion, a trifluoromethanesulfonic acid anion, a bis(trifluoromethanesulfonyl)imide anion, a bis(fluorosulfonyl)imide anion, and a bis(difluorophosphoryl)imide anion.

The nonaqueous electrolyte solution according to any one of <1> to <12>, wherein the amount of a compound represented by the general formula (1) with respect to the total amount of the compound represented by the general formula (1), a solute, and a nonaqueous organic solvent is 0.01 mass% or more and 10.0 mass% or less.

The nonaqueous electrolyte battery, comprising at least the nonaqueous electrolyte solution according to any one of <1> to <13>, a positive electrode, and a negative electrode having at least one selected from the group consisting of a negative electrode material comprising lithium metal, and a negative electrode material which can occlude and release lithium, sodium, potassium, or magnesium.

### EFFECT OF THE INVENTION

According to the present invention, it is possible to provide a nonaqueous electrolyte solution which has a low internal resistance after the initial charge and discharge, while having excellent low-temperature output characteristics after storage at high temperatures, and a nonaqueous electrolyte battery using the same.

### DESCRIPTION OF EMBODIMENT

The present invention will now be described in detail. It should be noted, however, that the descriptions of components described below is one of examples of the embodiments of the present invention, and the scope of the present invention is not limited to these specific contents. A variety of variants of the present invention can be made within the scope of the gist thereof.

In the phrase "(number) - (number)" or "(number) to (number)" is used to mean to include number values described before and after it as the lower limit and upper limit.

### [1. Electrolyte solution for nonaqueous battery]

The electrolyte solution for a nonaqueous battery of the present invention is a nonaqueous electrolyte solution comprising a compound represented by the above general formula (1), a solute, and a nonaqueous organic solvent.

### <(I) Compound represented by the general formula (1)>

The compound represented by the general formula (1) will be described.

The compound represented by the general formula (1) is reductively decomposed on the negative electrode at the time of the initial charge, to form a stable film derived from the compound on the negative electrode surface, and thus low-temperature output characteristics after storage at high temperatures of a battery can be improved. Meanwhile, a film is also formed on the positive electrode surface. This film contains many polar groups derived from the compound and has excellent ion conductivity, and thus it is presumed that the internal resistance of the battery can be reduced, and low-temperature output characteristics after storage at high temperatures can be improved. 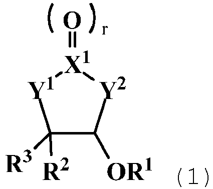 In the general formula (1), each notation has the following meaning.

X¹ represents a carbon atom or a sulfur atom.

Y¹ and Y² represent oxygen atoms or methylene groups which may be substituted by a halogen atom.

r represents 1 in the case where X¹ represents a carbon atom, 1 in the case where X¹ represents a sulfur atom and Y¹ and Y² represent oxygen atoms, and 2 in the other cases.

R¹ represents a group represented by the general formula (2) below or a group represented by the general formula (3) below, provided that (i) in the case where X¹ represents a sulfur atom and Y¹ and Y² represent methylene groups, and (ii) in the case where X¹ represents a carbon atom and Y¹ and Y² represent oxygen atoms, R¹ represents a group represented by the general formula (2).

R² and R³ each independently represents a hydrogen atom, a halogen atom, an alkyl group having 1-20 carbon atoms which may be substituted by a halogen atom, an alkenyl group having 2-20 carbon atoms which may be substituted by a halogen atom, an alkynyl group having 2-20 carbon atoms which may be substituted by a halogen atom, an alkoxy group having 1-20 carbon atoms which may be substituted by a halogen atom, a cycloalkyl group having 5-20 carbon atoms which may be substituted by a halogen atom, an aryl group having 6-40 carbon atoms which may be substituted by a halogen atom, or a heteroaryl group having 2-40 carbon atoms which may be substituted by a halogen atom.

In the general formula (1), X¹ represents a carbon atom or a sulfur atom. X¹ preferably represents a sulfur atom.

In the general formula (1), Y¹ and Y² represent oxygen atoms or methylene groups which may be substituted by a halogen atom.

In the case where Y¹ and Y² represent methylene groups which may be substituted by a halogen atom, examples of the groups include a methylene group (-CH₂-), a fluoromethylene group, a difluoromethylene group, a chloromethylene group, a dichloromethylene group, and the like.

Y¹ preferably represents an oxygen atom or a methylene group, and more preferably an oxygen atom.

In the general formula (1), R¹ represents a group represented by the general formula (2) below or a group represented by the general formula (3) below, provided that (i) in the case where X¹ represents a sulfur atom and Y¹ and Y² represent methylene groups, and (ii) in the case where X¹ represents a carbon atom and Y¹ and Y² represent oxygen atoms, R¹ represents a group represented by the general formula (2). 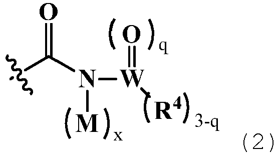 In the general formula (2), each notation has the following meaning.

M represents a hydrogen atom, an alkali metal ion, an alkaline earth metal ion, or a monovalent or divalent onium ion. In the case where M represents an alkali metal ion, an alkaline earth metal ion, or a monovalent or divalent onium ion, the bond between the nitrogen atom and M in the general formula (2) is an ionic bond.

x represents 1 in the case where M represents a hydrogen atom, an alkali metal ion or a monovalent onium ion, and 0.5 in the case where M represents an alkaline earth metal ion or a divalent onium ion.

W represents a phosphorus atom or a sulfur atom, and q represents 1 in the case where W represents a phosphorus atom, and 2 in the case where W represents a sulfur atom.

R⁴ represents a halogen atom, an alkyl group having 1-20 carbon atoms which may be substituted by a halogen atom or an FSO₂ group, a cycloalkyl group having 5-20 carbon atoms which may be substituted by a halogen atom or an FSO₂ group, an alkenyl group having 2-20 carbon atoms which may be substituted by a halogen atom or an FSO₂ group, an alkynyl group having 2-20 carbon atoms which may be substituted by a halogen atom or an FSO₂ group, an aryl group having 6-40 carbon atoms which may be substituted by a halogen atom or an FSO₂ group, a heteroaryl group having 2-40 carbon atoms which may be substituted by a halogen atom or an FSO₂ group, an alkoxy group having 1-20 carbon atoms which may be substituted by a halogen atom or an FSO₂ group, a cycloalkoxy group having 5-20 carbon atoms which may be substituted by a halogen atom or an FSO₂ group, an alkenyloxy group having 2-20 carbon atoms which may be substituted by a halogen atom or an FSO₂ group, an alkynyloxy group having 2-20 carbon atoms which may be substituted by a halogen atom or an FSO₂ group, an aryloxy group having 6-40 carbon atoms which may be substituted by a halogen atom or an FSO₂ group, or a heteroaryloxy group having 2-40 carbon atoms which may be substituted by a halogen atom or an FSO₂ group. A plurality of R⁴s may be the same or different when q = 1.

In the case where M in the general formula (2) represents an alkali metal ion, an alkaline earth metal ion or an onium ion, the bond between the nitrogen atom and M in the general formula (2) is an ionic bond. In the case where M represents an alkali metal ion or a monovalent onium ion, the group represented by general formula (2) is equal to a group represented by the general formula (2-1) below. 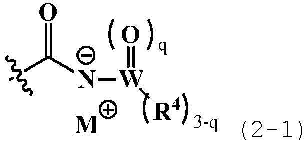 In the general formula (2-1), each notation has the following meaning.

M⁺ represents an alkali metal ion or a monovalent onium ion.

W represents a phosphorus atom or a sulfur atom, q represents 1 in the case where W represents a phosphorus atom, and 2 in the case where W represents a sulfur atom.

R⁴ represents a halogen atom, an alkyl group having 1-20 carbon atoms which may be substituted by a halogen atom, a cycloalkyl group having 5-20 carbon atoms which may be substituted by a halogen atom, an alkenyl group having 2-20 carbon atoms which may be substituted by a halogen atom, an alkynyl group having 2-20 carbon atoms which may be substituted by a halogen atom, an aryl group having 6-40 carbon atoms which may be substituted by a halogen atom, a heteroaryl group having 2-40 carbon atoms which may be substituted by a halogen atom, an alkoxy group having 1-20 carbon atoms which may be substituted by a halogen atom, a cycloalkoxy group having 5-20 carbon atoms which may be substituted by a halogen atom, an alkenyloxy group having 2-20 carbon atoms which may be substituted by a halogen atom, an alkynyloxy group having 2-20 carbon atoms which may be substituted by a halogen atom, an aryloxy group having 6-40 carbon atoms which may be substituted by a halogen atom, or a heteroaryloxy group having 2-40 carbon atoms which may be substituted by a halogen atom. A plurality of R⁴s may be the same or different when q = 1.

x in the general formula (2) is 0.5 in the case where M represents an alkaline earth metal ion or a divalent onium ion. In this case, the compound represented by the general formula (1) is equal to a compound represented by the general formula (1-1) below. 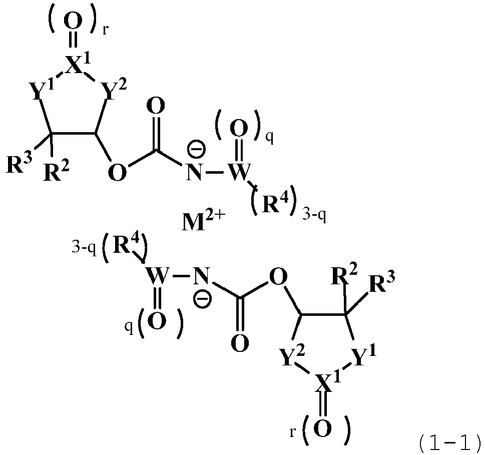 In the general formula (1-1), each notation has the following meaning.

X¹ represents a carbon atom or a sulfur atom.

Y¹ and Y² represent oxygen atoms or methylene groups which may be substituted by a halogen atom.

r represents 1 in the case where X¹ represents a carbon atom, 1 in the case where X¹ represents a sulfur atom and Y¹ and Y² represent oxygen atoms, and 2 in the other cases.

R² and R³ each independently represents a hydrogen atom, a halogen atom, an alkyl group having 1-20 carbon atoms which may be substituted by a halogen atom, an alkenyl group having 2-20 carbon atoms which may be substituted by a halogen atom, an alkynyl group having 2-20 carbon atoms which may be substituted by a halogen atom, an alkoxy group having 1-20 carbon atoms which may be substituted by a halogen atom, a cycloalkyl group having 5-20 carbon atoms which may be substituted by a halogen atom, an aryl group having 6-40 carbon atoms which may be substituted by a halogen atom, or a heteroaryl group having 2-40 carbon atoms which may be substituted by a halogen atom.

M²⁺ represents an alkaline earth metal ion or a divalent onium ion.
W represents a phosphorus atom or a sulfur atom,
q represents 1 in the case where W represents a phosphorus atom, and 2 in the case where W represents a sulfur atom.

R⁴ represents a halogen atom, an alkyl group having 1-20 carbon atoms which may be substituted by a halogen atom or an FSO₂ group, a cycloalkyl group having 5-20 carbon atoms which may be substituted by a halogen atom or an FSO₂ group, an alkenyl group having 2-20 carbon atoms which may be substituted by a halogen atom or an FSO₂ group, an alkynyl group having 2-20 carbon atoms which may be substituted by a halogen atom or an FSO₂ group, an aryl group having 6-40 carbon atoms which may be substituted by a halogen atom or an FSO₂ group, a heteroaryl group having 2-40 carbon atoms which may be substituted by a halogen atom or an FSO₂ group, an alkoxy group having 1-20 carbon atoms which may be substituted by a halogen atom or an FSO₂ group, a cycloalkoxy group having 5-20 carbon atoms which may be substituted by a halogen atom or an FSO₂ group, an alkenyloxy group having 2-20 carbon atoms which may be substituted by a halogen atom or an FSO₂ group, an alkynyloxy group having 2-20 carbon atoms which may be substituted by a halogen atom or an FSO₂ group, an aryloxy group having 6-40 carbon atoms which may be substituted by a halogen atom or an FSO₂ group, or a heteroaryloxy group having 2-40 carbon atoms which may be substituted by a halogen atom or an FSO₂ group. A plurality of R⁴s may be the same or different when q = 1.

M in the general formula (2) represents a hydrogen atom, an alkali metal ion, an alkaline earth metal ion, or a monovalent or divalent onium ion.

In the case where M represents an alkali metal ion, specific examples thereof include a lithium cation, a sodium cation, a potassium cation, and the like.

In the case where M represents an alkaline earth metal ion, specific examples thereof include a magnesium cation, a calcium cation, and the like.

In the case where M represents a monovalent or divalent onium ion, specific examples thereof include a tetraalkylammonium cation, a tetraalkylphosphonium cation, a tetraalkylalkylenediamine, and the like. Examples of the alkyl groups in the tetraalkylammonium cation, tetraalkylphosphonium cation and tetraalkylalkylenediamine include an alkyl group having 1-6 carbon atoms, and specifically include an ethyl group, an n-propyl group, an n-butyl group, and the like. Examples of the alkylene group in the tetraalkylalkylenediamine include an alkylene group having 1-6 carbon atoms, and specifically include a methylene group, an ethylene group, an n-propylene group, an n-butylene group, and the like. Specific examples of the tetraalkylalkylenediamine include tetramethylethylenediamine, tetramethylpropylenediamine, tetramethylbutylenediamine, and the like.

M preferably represents a hydrogen atom, a lithium cation, a sodium cation, a potassium cation, a tetraalkylammonium cation or a tetraalkylphosphonium cation, more preferably a hydrogen atom, a lithium cation, a sodium cation or a potassium cation, and further preferably a lithium cation.

W in the general formula (2) represents a phosphorus atom or a sulfur atom. W preferably represents a sulfur atom.

R⁴ in the general formula (2) represents a halogen atom, an alkyl group having 1-20 carbon atoms which may be substituted by a halogen atom or an FSO₂ group, a cycloalkyl group having 5-20 carbon atoms which may be substituted by a halogen atom or an FSO₂ group, an alkenyl group having 2-20 carbon atoms which may be substituted by a halogen atom or an FSO₂ group, an alkynyl group having 2-20 carbon atoms which may be substituted by a halogen atom or an FSO₂ group, an aryl group having 6-40 carbon atoms which may be substituted by a halogen atom or an FSO₂ group, a heteroaryl group having 2-40 carbon atoms which may be substituted by a halogen atom or an FSO₂ group, an alkoxy group having 1-20 carbon atoms which may be substituted by a halogen atom or an FSO₂ group, a cycloalkoxy group having 5-20 carbon atoms which may be substituted by a halogen atom or an FSO₂ group, an alkenyloxy group having 2-20 carbon atoms which may be substituted by a halogen atom or an FSO₂ group, an alkynyloxy group having 2-20 carbon atoms which may be substituted by a halogen atom or an FSO₂ group, an aryloxy group having 6-40 carbon atoms which may be substituted by a halogen atom or an FSO₂ group, or a heteroaryloxy group having 2-40 carbon atoms which may be substituted by a halogen atom or an FSO₂ group, and a plurality of R⁴s may be the same or different when q = 1.

In the case where R⁴ represents a halogen atom, specific examples thereof include a fluorine atom, a chlorine atom, a bromine atom, an iodine atom, and the like, and it is preferably a fluorine atom.

In the case where the alkyl group, cycloalky group, alkenyl group, alkynyl group, aryl group, heteroaryl group, alkoxy group, cycloalkoxy group, alkenyloxy group, alkynyloxy group, aryloxy group, and heteroaryloxy group represented by R⁴ have a halogen atom as a substituent, examples of the halogen atom include a fluorine atom, a chlorine atom, a bromine atom, an iodine atom, and the like, and it is preferably a fluorine atom.

In the case where R⁴ represents an alkyl group having 1-20 carbon atoms which may be substituted by a halogen atom or an FSO₂ group, examples of the alkyl group include a liner or branched alkyl group, and it is preferably a fluorine-substituted or unsubstituted alkyl group. Specific examples thereof include a methyl group, an ethyl group, an n-propyl group, an isopropyl group, an n-butyl group, a tert-butyl group, an n-pentyl group, an n-hexyl group, a trifluoromethyl group, a 2,2,2-trifluoroethyl group, a 3-fluoropropyl group, a 3,3,3-trifluoropropyl group, a 2,2,3,3,3-pentafluoropropyl group, a 2,2,3,3-tetrafluoropropyl group, a hexafluoroisopropyl group, and the like.

In the case where R⁴ represents a cycloalkyl group having 5-20 carbon atoms which may be substituted by a halogen atom or an FSO₂ group, the cycloalkyl group is preferably a fluorine-substituted or unsubstituted cycloalkyl group. Specific examples thereof include a cyclopentyl group, a cyclohexyl group, and the like.

In the case where R⁴ represents an alkenyl group having 2-20 carbon atoms which may be substituted by a halogen atom or FSO₂ group, examples of the alkenyl group include a linear or branched alkenyl group, and it is preferably a fluorine-substituted or unsubstituted alkenyl group. Specific examples thereof include an ethenyl group, a 2-propenyl group, and the like.

In the case where R⁴ represents an alkynyl group having 2-20 carbon atoms which may be substituted by a halogen atom or an FSO₂ group, examples of the alkynyl group include a linear or branched alkynyl group, and it is preferably a fluorine-substituted or unsubstituted alkynyl group. Specific examples thereof include a 2-propynyl group, and the like.

In the case where R⁴ represents an aryl group having 6-40 carbon atoms which may be substituted by a halogen atom or an FSO₂ group, the aryl group is preferably a fluorine-substituted or unsubstituted aryl group, and specific examples thereof include a phenyl group, a naphthyl group, a pentafluorophenyl group, a 2-fluorophenyl group, a 3-fluorophenyl group, a 4-fluorophenyl group, a 2-fluorosulfonylphenyl group (" (o-FSO₂)-C₆H₄-" group, the same applies hereinafter), a 3-fluorosulfonylphenyl group ("(m-FSO₂)-C₆H₄-" group, the same applies hereinafter), a 4-fluorosulfonylphenyl group (" (p-FSO₂)-C₆H₄-" group, the same applies hereinafter), and the like.

In the case where R⁴ represents a heteroaryl group having 2-40 carbon atoms which may be substituted by a halogen atom or an FSO₂ group, the heteroaryl group is preferably a fluorine-substituted or unsubstituted heteroaryl group, and specific examples thereof include a pyrrolyl group, a pyridinyl group, and the like.

In the case where R⁴ represents an alkoxy group having 1-20 carbon atoms which may be substituted by a halogen atom or an FSO₂ group, examples of the alkoxy group include a linear or branched alkoxy group, and it is preferably a fluorine-substituted or unsubstituted alkoxy group. Specific examples thereof include a methoxy group, an ethoxy group, an n-propoxy group, an isopropoxy group, an n-butoxy group, a tert-butoxy group, an n-pentyloxy group, an n-hexyloxy group, a trifluoromethoxy group, a 2,2,2-trifluoroethoxy group, a 3-fluoropropoxy group, a 3,3,3-trifluoropropoxy group, a 2,2,3,3,3-pentafluoropropoxy group, a 2,2,3,3-tetrafluoropropoxy group, a hexafluoroisopropoxy group, and the like.

In the case where R⁴ represents a cycloalkoxy group having 5-20 carbon atoms which may be substituted by a halogen atom or an FSO₂ group, the cycloalkoxy group is preferably a fluorine-substituted or unsubstituted cycloalkoxy group, and specific examples thereof include a cyclopentyloxy group, a cyclohexyloxy group, and the like. In the case where R⁴ represents an alkenyloxy group having 2-20 carbon atoms which may be substituted by a halogen atom or an FSO₂ group, examples of the alkenyloxy group include a linear or branched alkenyloxy group, and it is preferably a fluorine-substituted or unsubstituted alkenyloxy group. Specific examples thereof include an ethenyloxy group, a 2-propenyloxy group, and the like.

In the case where R⁴ represents an alkynyloxy group having 2-20 carbon atoms which may be substituted by a halogen atom or an FSO₂ group, examples of the alkynyloxy group include a linear or branched alkynyloxy group, and it is preferably a fluorine-substituted or unsubstituted alkynyloxy group. Specific examples thereof include a 2-propynyloxy group, and the like.

In the case where R⁴ is an aryloxy group having 6-40 carbon atoms which may be substituted by a halogen atom or an FSO₂ group, the aryloxy group is preferably a fluorine-substituted or unsubstituted aryloxy group, and specific examples thereof include a phenoxy group, a naphthyloxy group, a pentafluorophenoxy group, a 2-fluorophenoxy group, a 3-fluorophenoxy group, a 4-fluorophenoxy group, a 2-fluorosulfonylphenoxy group, a 3-fluorosulfonylphenoxy group, a 4-fluorosulfonylphenoxy group, and the like.

In the case where R⁴ represents a heteroaryloxy group having 2-40 carbon atoms which may be substituted by a halogen atom or an FSO₂ group, the heteroaryloxy group is preferably a fluorine-substituted or unsubstituted heteroaryloxy group, and specific examples thereof include a pyrrolyloxy group, a pyridinyloxy group, and the like.

R⁴ preferably represents a fluorine atom, a methyl group, an ethyl group, an n-propyl group, an isopropyl group, an n-butyl group, a tert-butyl group, an n-pentyl group, an n-hexyl group, a trifluoromethyl group, a trifluoroethyl group, an ethenyl group, a 2-propenyl group, a 2-propynyl group, a phenyl group, a naphthyl group, a pentafluorophenyl group, a pyrrolyl group, a pyridinyl group, a methoxy group, an ethoxy group, an n-propoxy group, an isopropoxy group, an n-butoxy group, a tert-butoxy group, an n-pentyloxy group, an n-hexyloxy group, a trifluoromethoxy group, a trifluoroethoxy group, an ethenyloxy group, a 2-propenyloxy group, a 2-propynyloxy group, a phenoxy group, a naphthyloxy group, or a pentafluorophenoxy group, and more preferably a fluorine atom, a methyl group, an ethyl group, an n-propyl group, a trifluoromethyl group, an ethenyl group, a 2-propenyl group, a 2-propynyl group, a phenyl group, a methoxy group, a 2-propenyloxy group, a 2-propynyloxy group, a phenoxy group, or a pentafluorophenoxy group.

In particular, R⁴ is preferably a fluorine atom, a methyl group, or a methoxy group from a viewpoint of initial internal resistance reduction, and R⁴ is preferably a fluorine atom, a methyl group, or an ethenyl group from a viewpoint of better low-temperature output characteristics after storage at high temperatures.

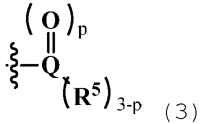

In the general formula (3), each notation has the following meaning.

Q represents a phosphorus atom or a sulfur atom, and preferably a phosphorus atom.

p represents 1 in the case where Q represents a phosphorus atom, and 2 in the case where Q represents a sulfur atom.

R⁵ represents a halogen atom. The halogen atom is a fluorine atom, a chlorine atom, a bromine atom, or an iodine atom, and preferably a fluorine atom.

A plurality of R⁵s may be the same or different when p = 1.

In the case where, in the general formula (1), X¹ represents a sulfur atom, Y¹ represents an oxygen atom, and Y² represents a methylene group, Q represents a phosphorus atom.

In the general formula (1), R¹ is more preferably the above formula (3) from a viewpoint of internal resistance reduction after the initial charge and discharge, and R¹ is more preferably the above formula (2) from a viewpoint of improving low-temperature output characteristics after storage at high temperatures.

In the general formula (1), R² and R³ each independently represents a hydrogen atom, a halogen atom, an alkyl group having 1-20 carbon atoms which may be substituted by a halogen atom, an alkenyl group having 2-20 carbon atoms which may be substituted by a halogen atom, an alkynyl group having 2-20 carbon atoms which may be substituted by a halogen atom, an alkoxy group having 1-20 carbon atoms which may be substituted by a halogen atom, a cycloalkyl group having 5-20 carbon atoms which may be substituted by a halogen atom, an aryl group having 6-40 carbon atoms which may be substituted by a halogen atom, or a heteroaryl group having 2-40 carbon atoms which may be substituted by a halogen atom.

In the case where R² or R³ represents a halogen atom, specific examples thereof include a fluorine atom, a chlorine atom, a bromine atom, and an iodine atom, and it is preferably a fluorine atom.

In the case where the alkyl group, alkenyl group, alkynyl group, alkoxy group, cycloalkyl group, aryl group, or heteroaryl group represented by R² or R³ has a halogen atom as a substituent, examples of the halogen atom include a fluorine atom, a chlorine atom, a bromine atom, an iodine atom, and the like, and it is preferably a fluorine atom.

In cases where R² or R³ represents an alkyl group having 1-20 carbon atoms which may be substituted by a halogen atom, examples of the alkyl group include a linear or branched alkyl group, and it is preferably a fluorine-substituted or unsubstituted alkyl group. Specific examples thereof include a methyl group, an ethyl group, an n-propyl group, an isopropyl group, an n-butyl group, a tert-butyl group, a trifluoromethyl group, a tetrafluoroethyl group, and the like.

In the case where R² or R³ represents an alkenyl group having 2-20 carbon atoms which may be substituted by a halogen atom, examples of the alkenyl group include a linear or branched alkenyl group, and it is preferably a fluorine-substituted or unsubstituted alkenyl group. Specific examples thereof include an ethenyl group, a 2-propenyl group, and the like.

In the case where R² or R³ represents an alkynyl group having 2-20 carbon atoms which may be substituted by a halogen atom, examples of the alkynyl group include a linear or branched alkynyl group, and it is preferably a fluorine-substituted or unsubstituted alkynyl group. Specific examples thereof include a 2-propynyl group, and the like.

In the case where R² or R³ represents an alkoxy group having 1-20 carbon atoms which may be substituted by a halogen atom, examples of the alkoxy group include a linear or branched alkoxy group, and it is preferably a fluorine-substituted or unsubstituted alkoxy group. Specific examples thereof include a methoxy group, an ethoxy group, an n-propoxy group, and the like.

In the case where R² or R³ represents a cycloalkyl group having 5-20 carbon atoms which may be substituted by a halogen atom, the cycloalkyl group is preferably a fluorine-substituted or unsubstituted cycloalkyl group, and specific examples thereof include a cyclopentyl group, a cyclohexyl group, and the like.

In the case where R² or R³ represents an aryl group having 6-40 carbon atoms which may be substituted by a halogen atom, the aryl group is preferably a fluorine-substituted or unsubstituted aryl group, and specific examples thereof include a phenyl group, a naphthyl group, a pentafluorophenyl group, and the like.

In the case where R² or R³ represents a heteroaryl group having 2-40 carbon atoms which may be substituted by a halogen atom, the heteroaryl group is preferably a fluorine-substituted or unsubstituted heteroaryl group, and specific examples thereof include a pyrrolyl group, a pyridinyl group, and the like.

It is preferred that R² and R³ be each independently selected from a hydrogen atom, a fluorine atom, a methyl group, an ethyl group, an n-propyl group, an isopropyl group, an n-butyl group, a tert-butyl group, a trifluoromethyl group, a tetrafluoroethyl group, a phenyl group, a naphthyl group, a pentafluorophenyl group, a pyrrolyl group, and a pyridinyl group, and it is more preferred that R² be a hydrogen atom and R³ be selected from a hydrogen atom, a fluorine atom, a methyl group, an ethyl group, an n-propyl group, an isopropyl group, an n-butyl group, a tert-butyl group, a trifluoromethyl group, a tetrafluoroethyl group, a phenyl group, a naphthyl group, a pentafluorophenyl group, a pyrrolyl group, and a pyridinyl group. It is further preferred that R² be a hydrogen atom or a fluorine atom, and R³ be selected from a hydrogen atom, a fluorine atom, a methyl group, a trifluoromethyl group, and a phenyl group, and it is particularly preferred that R² be a hydrogen atom and R³ be a hydrogen atom or a fluorine atom.

Specific examples of the compound represented by the above general formula (1) will be shown below. However, the scope of the compound is not limited thereto. M in the formulae below has the same meaning as M in the above general formula (2).

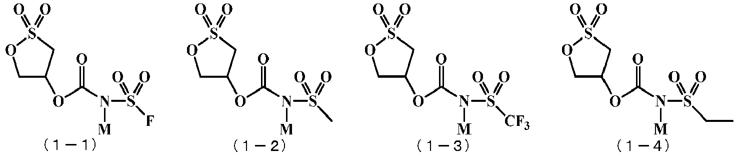

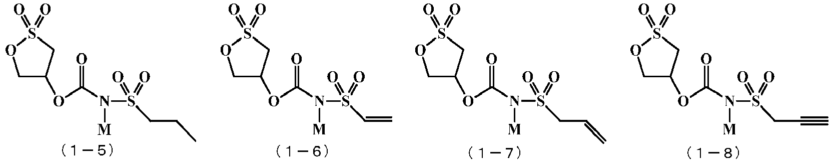

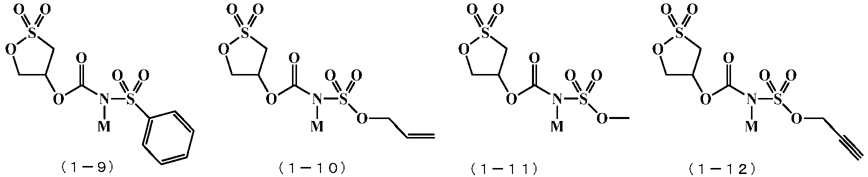

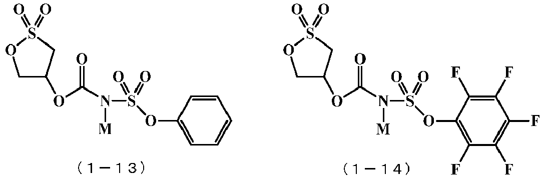

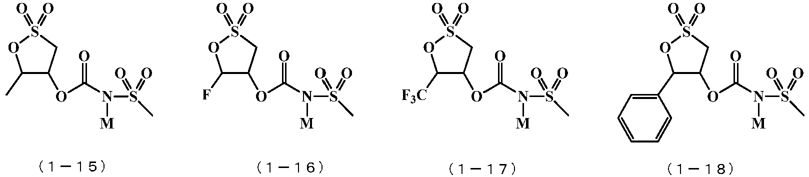

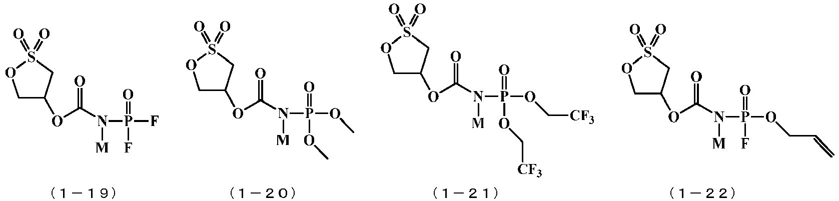

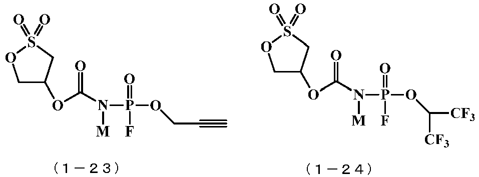

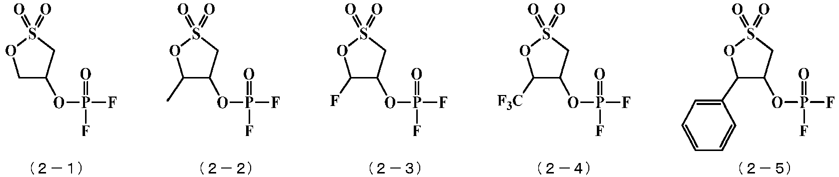

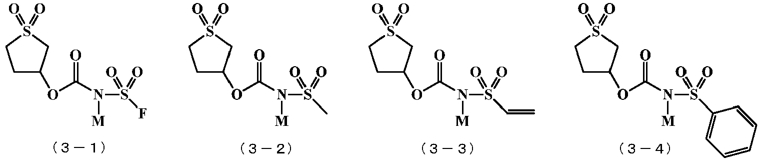

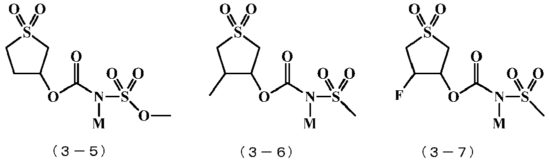

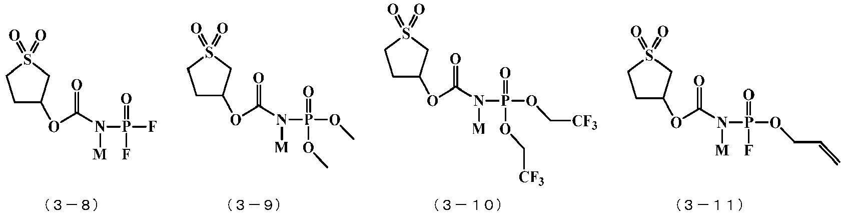

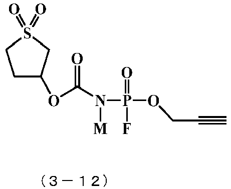

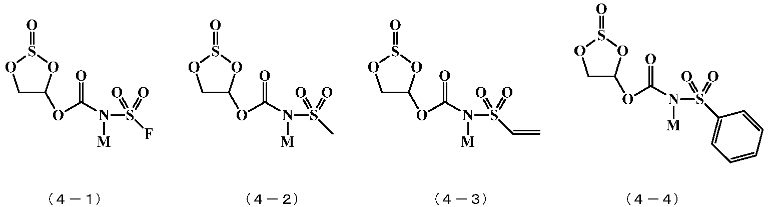

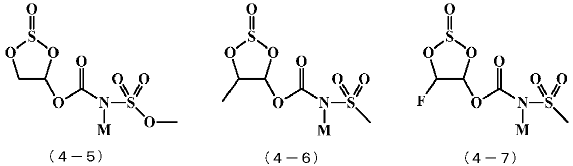

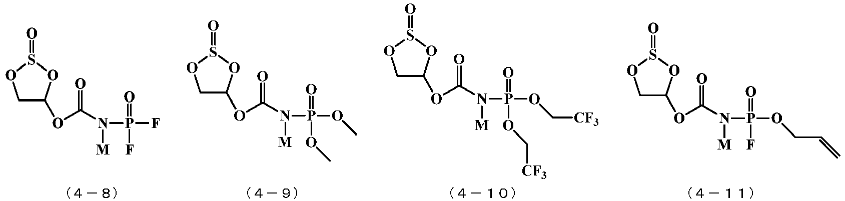

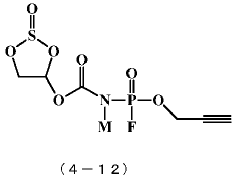

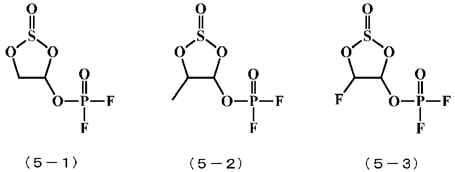

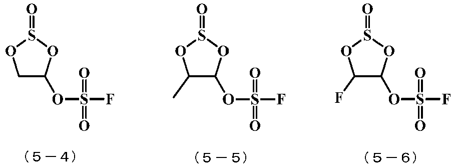

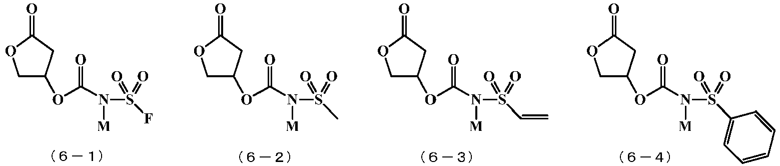

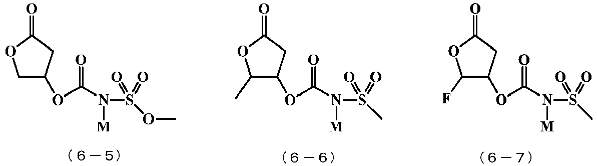

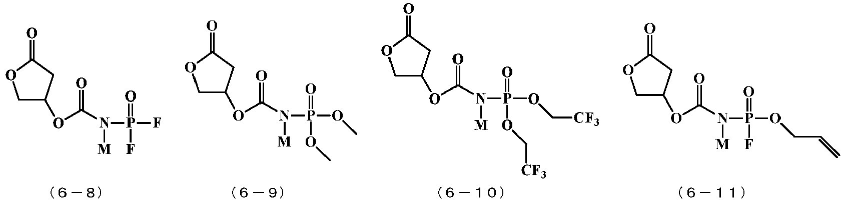

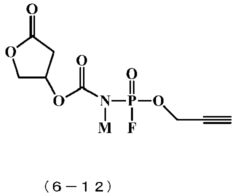

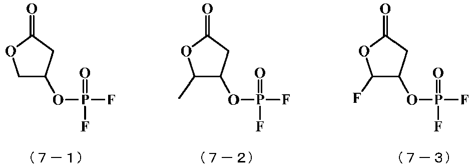

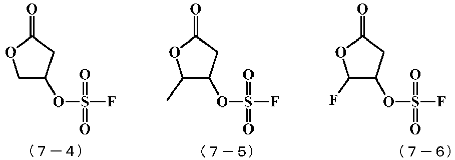

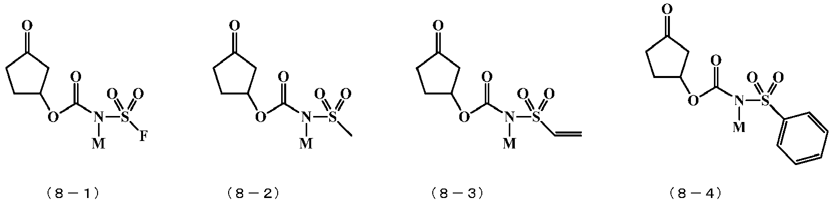

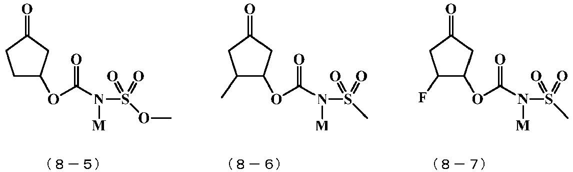

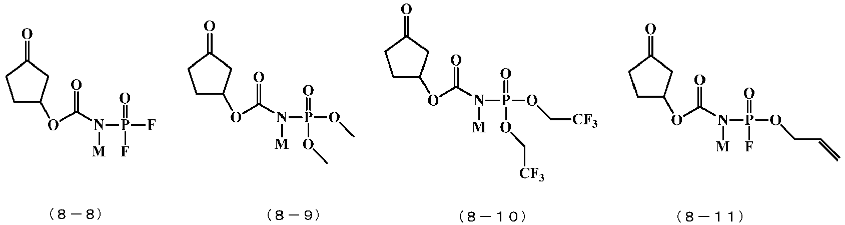

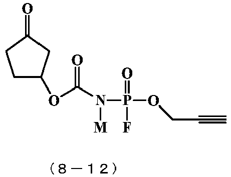

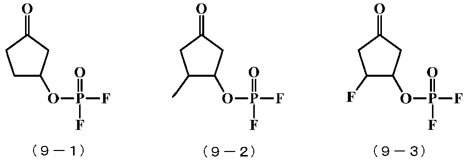

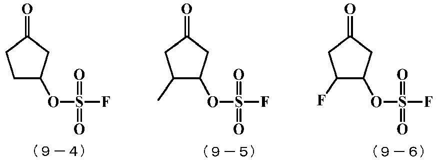

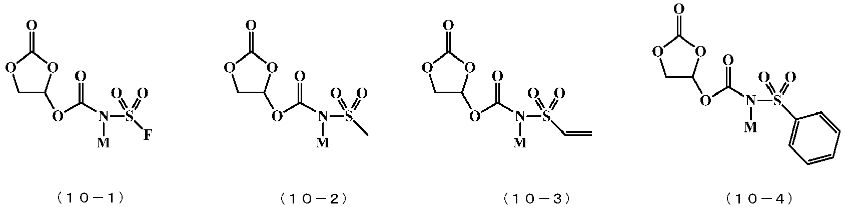

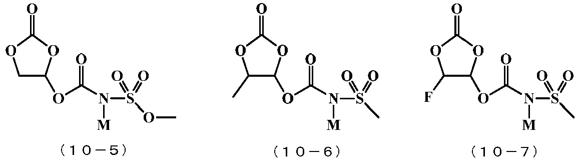

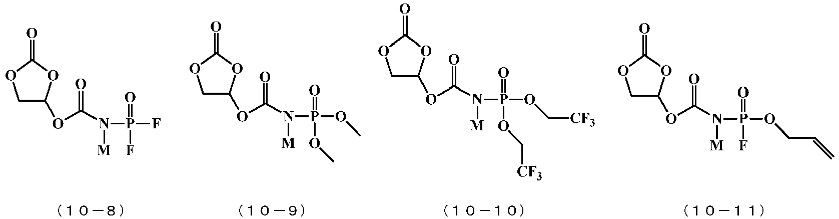

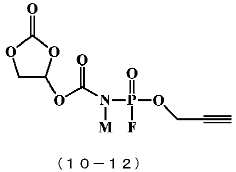

Among these specific examples of the compound represented by the general formula (1), at least one selected from the group consisting of the compounds represented by the above formulae (1-1) to (1-18), (2-1) to (2-5), (3-1) to (3-7), (4-1) to (4-7), (5-1) to (5-6), (6-1) to (6-7), and (7-1) to (7-6) is preferred.

Furthermore, at least one selected from the group consisting of the compounds represented by formulae (1-1), (1-2), (1-6), (1-9), (1-11), (1-12), (1-15), (1-16), (1-18), (2-1), (2-3), (2-5), (3-1), (4-1), (6-1), (7-1), and (7-4) is more preferred.

In this connection, the compounds represented by the formulae (1-1), (1-2), (1-11), (1-15), (1-16), (2-1), (2-3), (2-5), (3-1), (4-1), and (7-1) are further preferred from a viewpoint of internal resistance reduction after the initial charge and discharge, and the compounds represented by the formulae (1-1), (1-2), (1-6), (1-9), (1-16), (1-18), (2-3), (2-5), and (4-1) are further preferred from a viewpoint of improving low-temperature output characteristics after storage at high temperatures, and the compounds represented by the formulae (1-1), (1-16), (2-1), (2-3), (3-1), and (4-1) are particularly preferred from a viewpoint of displaying the above two effects in a well-balanced manner.

In the nonaqueous electrolyte solution of the present invention, the compound represented by the above general formula (1) is preferably used as an additive.

In the above nonaqueous electrolyte solution, the amount of the compound represented by the general formula (1) with respect to the total amount of the compound represented by the general formula (1), a solute, and a nonaqueous organic solvent (100 mass%) is preferably 0.01 mass% or more and 10.0 mass% or less. When the amount is 0.01 mass% or more, it is easy to obtain the effect of improving the characteristics of a nonaqueous electrolyte battery, while when the amount is 10.0 mass% or less, it is easy to display a good effect of improving cycle characteristics. The amount is more preferably 0.2 mass% or more and 5.0 mass% or less, and further preferably 0.5 mass% or more and 2.0 mass% or less.

The compounds represented by the general formula (1) may be used individually, and a plurality of the compounds may be used in combination.

The method for synthesizing a compound of the general formula (1) wherein R¹ is represented by the general formula (2) is not particularly limited, and the compound can be obtained, for example, by the ion exchange reaction of a substance obtained by reacting the corresponding hydroxy cyclic sulfonic acid ester or hydroxy cyclic carboxylic acid ester with the corresponding isocyanate, with the corresponding cation species.

The method for synthesizing a compound of the general formula (1) wherein R¹ is represented by the general formula (3) is not particularly limited, and the compound can be obtained, for example, by reacting the corresponding hydroxy cyclic sulfonic acid ester or hydroxy cyclic carboxylic acid ester with the corresponding phosphoryl chloride or sulfonyl chloride in the presence of an organic base or an inorganic base.

### <(II) Solute>

The nonaqueous electrolyte solution of the present invention contains a solute.

The solute is not particularly limited, and is preferably an ionic salt and more preferably an ionic salt including fluorine.

For example, the solute is preferably an ionic salt including a pair of at least one cation selected from the group consisting of an alkali metal ion and an alkaline earth metal ion, with at least one anion selected from the group consisting of a hexafluorophosphoric acid anion, a tetrafluoroboric acid anion, a trifluoromethanesulfonic acid anion, a fluorosulfonic acid anion, a bis(trifluoromethanesulfonyl)imide anion, a bis(fluorosulfonyl)imide anion, a (trifluoromethanesulfonyl)(fluorosulfonyl)imide anion, a bis(difluorophosphoryl)imide anion, a (difluorophosphoryl)(fluorosulfonyl)imide anion, and a (difluorophosphoryl)(trifluoromethanesulfonyl)imide anion.

The solute is more preferably an ionic salt including a pair of at least one cation selected from the group consisting of an alkali metal ion and an alkaline earth metal ion, with at least one anion selected from the group consisting of a hexafluorophosphoric acid anion, a tetrafluoroboric acid anion, a bis(fluorosulfonyl)imide anion, a trifluoromethanesulfonic acid anion, and a bis(trifluoromethanesulfonyl)imide anion.

In addition, it is preferred that the cation of an ionic salt as a solute, be lithium, sodium, potassium or magnesium, and the anion be at least one selected from the group consisting of a hexafluorophosphoric acid anion, a tetrafluoroboric acid anion, a trifluoromethanesulfonic acid anion, a bis(trifluoromethanesulfonyl)imide anion, a bis(fluorosulfonyl)imide anion, and a bis(difluorophosphoryl)imide anion in terms of high solubility in the above nonaqueous organic solvent and electrochemical stability.

It is more preferred that the cation of a solute be lithium, sodium, potassium, or magnesium and the anion be at least one selected from the group consisting of a hexafluorophosphoric acid anion, a tetrafluoroboric acid anion, a bis(fluorosulfonyl)imide anion, a trifluoromethanesulfonic acid anion, and a bis(trifluoromethanesulfonyl)imide anion.

The concentration of the solute is not particularly limited, and the lower limit of the concentration of the solute in the nonaqueous electrolyte solution is 0.5 mol/L or more, preferably 0.7 mol/L or more, and further preferably 0.9 mol/L or more, and the upper limit is 2.5 mol/L or less, preferably 2.2 mol/L or less, and further preferably 2.0 mol/L or less. When the concentration is 0.5 mol/L or more, reductions in cycle characteristics and output characteristics of the resultant nonaqueous electrolyte battery due to ion conductivity reduction can be suppressed, and when the concentration is 2.5 mol/L or less, a reduction in ion conduction due to an increase in the viscosity of the electrolyte solution for the resultant nonaqueous battery and reductions in cycle characteristics and output characteristics of the nonaqueous electrolyte battery can be suppressed. In addition, these solutes may be used individually and a plurality of the solutes may be used in combination.

### <(III) Nonaqueous organic solvent>

The type of nonaqueous organic solvents to be used for the nonaqueous electrolyte solution of the present invention is not particularly limited, and any nonaqueous organic solvent can be used. Specifically, it is preferably at least one selected from the group consisting of ethylmethyl carbonate (hereinafter referred to as "EMC"), dimethyl carbonate (hereinafter referred to as "DMC"), diethyl carbonate (hereinafter referred to as "DEC"), methylpropyl carbonate, ethylpropyl carbonate, methylbutyl carbonate, 2,2,2-trifluoroethylmethyl carbonate, 2,2,2-trifluoroethylethyl carbonate, 2,2,2-trifluoroethylpropyl carbonate, bis(2,2,2-trifluoroethyl)carbonate, 1,1,1,3,3,3-hexafluoro-1-propylmethyl carbonate, 1,1,1,3,3,3-hexafluoro-1-propylethyl carbonate, 1,1,1,3,3,3-hexafluoro-1-propylpropyl carbonate, bis(1,1,1,3,3,3-hexafluoro-1-propyl)carbonate, ethylene carbonate (hereinafter referred to as "EC"), propylene carbonate (hereinafter referred to as "PC"), butylene carbonate, fluoroethylene carbonate (hereinafter referred to as "FEC"), difluoroethylene carbonate, methyl acetate, ethyl acetate, methyl propionate, ethyl propionate, methyl 2-fluoropropionate, ethyl 2-fluoropropionate, diethyl ether, dibutyl ether, diisopropyl ether, 1,2-dimethoxyethane, tetrahydrofuran, 2-methyltetrahydrofuran, furan, tetrahydropyran, 1,3-dioxane, 1,4-dioxane, N,N-dimethylformamide, acetonitrile, propionitrile, dimethyl sulfoxide, sulfolane, y-butyrolactone, and y-valerolactone.

In addition, an ionic liquid which takes a salt structure may be used as a nonaqueous organic solvent in the present invention.

In addition, it is preferred that the above nonaqueous organic solvent be at least one selected from the group consisting of a cyclic carbonate and a chain carbonate because cycle characteristics are excellent at high temperatures. In addition, it is preferred that the above nonaqueous organic solvent be at least one selected from the group consisting of esters because input and output characteristics are excellent at low temperatures.

Specific examples of the above cyclic carbonate include EC, PC, butylene carbonate, and FEC and the like, and among them, at least one selected from the group consisting of EC, PC and FEC is preferred.

Specific examples of the above chain carbonate include EMC, DMC, DEC, methylpropyl carbonate, ethylpropyl carbonate, 2,2,2-trifluoroethylmethyl carbonate, 2,2,2-trifluoroethylethyl carbonate, 1,1,1,3,3,3-hexafluoro-1-propylmethyl carbonate, and 1,1,1,3,3,3-hexafluoro-1-propylethyl carbonate, and the like, and among them, at least one selected from the group consisting of EMC, DMC, DEC, and methylpropyl carbonate is preferred.

In addition, specific examples of the above esters include methyl acetate, ethyl acetate, methyl propionate, ethyl propionate, methyl 2-fluoropropionate, and ethyl 2-fluoropropionate, and the like.

### <Other additives>

Additional components commonly used may be further added at any ratio to the nonaqueous electrolyte solution of the present invention so long as the gist of the present invention is not lost. Specific examples thereof include compounds having the effect of preventing overcharge, the effect of forming a negative electrode film, and the effect of protecting a positive electrode, such as cyclohexylbenzene, cyclohexylfluorobenzene, fluorobenzene, biphenyl, difluoroanisole, tert-butylbenzene, tert-amylbenzene, 2-fluorotoluene, 2-fluorobiphenyl, vinylene carbonate, dimethylvinylene carbonate, vinyl ethylene carbonate, fluoroethylene carbonate, trans-difluoroethylene carbonate, methyl propargyl carbonate, ethyl propargyl carbonate, dipropargyl carbonate, maleic anhydride, succinic anhydride, 1,3-propanesultone (PS), 1-propene-1,3-sultone (PRS), butanesultone, methylenemethane disulfonate, dimethylenemethane disulfonate, trimethylenemethane disulfonate, methyl methanesulfonate, 1,6-diisocyanatohexane, tris(trimethylsilyl)borate, succinonitrile, (ethoxy)pentafluorocyclotriphosphazene, lithium difluorobis(oxalato)phosphate, sodium difluorobis(oxalato)phosphate, potassium difluorobis(oxalato)phosphate, lithium difluoro oxalato borate, sodium difluoro oxalato borate, potassium difluoro oxalato borate, lithium bisoxalato borate, sodium bisoxalato borate, potassium bisoxalato borate, lithium tetrafluoro oxalato phosphate, sodium tetrafluoro oxalato phosphate, potassium tetrafluoro oxalato phosphate, lithium tris(oxalato)phosphate, lithium difluorophosphate, lithium ethylfluorophosphate, lithium fluorophosphate, ethenesulfonyl fluoride, lithium fluorosulfonate, trifluoromethanesulfonyl fluoride, methanesulfonyl fluoride, and phenyl difluorophosphate.

The amount of other additives in the nonaqueous electrolyte solution is preferably 0.01 mass% or more and 8.0 mass% or less with respect to the total amount of the nonaqueous electrolyte solution.

In addition, the ionic salts mentioned as a solute can display the effect of forming a negative electrode film and the effect of protecting a positive electrode as "other additives" when the amount to be used in the nonaqueous electrolyte solution is smaller than 0.5 mol/L as the lower limit of a suitable concentration of the solute. In this case, the amount to be included in the nonaqueous electrolyte solution is preferably 0.01 mass% or more and 5.0 mass%. Examples of the ionic salt in this case include lithium trifluoromethanesulfonate, sodium trifluoromethanesulfonate, potassium trifluoromethanesulfonate, magnesium trifluoromethanesulfonate, lithium fluorosulfonate (hereinafter, may be referred to as LiSO₃F), sodium fluorosulfonate, potassium fluorosulfonate, magnesium fluorosulfonate, lithium bis(trifluoromethanesulfonyl)imide, sodium bis(trifluoromethanesulfonyl)imide, potassium bis(trifluoromethanesulfonyl)imide, magnesium bis(trifluoromethanesulfonyl)imide, lithium bis(fluorosulfonyl)imide, sodium bis(fluorosulfonyl)imide, potassium bis(fluorosulfonyl)imide, magnesium bis(fluorosulfonyl)imide, lithium (trifluoromethanesulfonyl)(fluorosulfonyl)imide, sodium (trifluoromethanesulfonyl)(fluorosulfonyl)imide, potassium (trifluoromethanesulfonyl)(fluorosulfonyl)imide, magnesium (trifluoromethanesulfonyl)(fluorosulfonyl)imide, lithium bis(difluorophosphoryl)imide, sodium bis(difluorophosphoryl)imide, potassium bis(difluorophosphoryl)imide, magnesium bis(difluorophosphoryl)imide, lithium (difluorophosphoryl)(fluorosulfonyl)imide, sodium (difluorophosphoryl)(fluorosulfonyl)imide, potassium (difluorophosphoryl)(fluorosulfonyl)imide, magnesium (difluorophosphoryl)(fluorosulfonyl)imide, lithium (difluorophosphoryl)(trifluoromethanesulfonyl)imide, sodium (difluorophosphoryl) (trifluoromethanesulfonyl)imide, potassium (difluorophosphoryl)(trifluoromethanesulfonyl)imide, and magnesium (difluorophosphoryl)(trifluoromethanesulfonyl)imide, and the like.

In addition, alkali metal salts other than the above solutes (lithium salt, sodium salt, potassium salt and magnesium salt) may be used as additives. Specific examples thereof include carboxylic acid salts such as lithium acrylate, sodium acrylate, lithium methacrylate, and sodium methacrylate, sulfuric acid ester salts such as lithium methyl sulfate, sodium methyl sulfate, lithium ethyl sulfate, sodium methyl sulfate, and the like.

In addition, the nonaqueous electrolyte solution of the present invention can include a polymer, and a pseudo-solid of the nonaqueous electrolyte solution obtained using a gelling agent and a cross-linking polymer can be used as in the case of a nonaqueous electrolyte battery called polymer battery. The polymer solid electrolyte also comprises a nonaqueous organic solvent as a plasticizing agent.

The above polymer is not particularly limited as long as it is an aprotic polymer which can dissolve the above compound represented by the general formula (1), the above solute and the above other additives. Examples thereof include a polymer having polyethylene oxide at the main chain or a side chain, a homopolymer or copolymer of polyvinylidene fluoride, a methacrylic acid ester polymer, polyacrylonitrile, and the like. When a plasticizing agent is added to these polymers, an aprotic nonaqueous organic solvent is preferred among the above nonaqueous organic solvents.

### [2. Nonaqueous electrolyte battery]

The nonaqueous electrolyte battery of the present invention includes at least (a) the above nonaqueous electrolyte solution of the present invention, (b) a positive electrode, and (c) a negative electrode having at least one selected from the group consisting of a negative electrode material including lithium metal and a negative electrode material which can occlude and release lithium, sodium, potassium or magnesium, and moreover preferably includes (d) a separator, packaging, and the like.

<(b) Positive electrode>

The positive electrode (b) preferably includes at least one oxide and/or polyanion compound as a positive electrode active material.

### [Positive electrode active material]

In the case of lithium ion secondary batteries wherein the cation in a nonaqueous electrolyte solution is mainly lithium, the positive electrode active materials to constitute a positive electrode (b) are not particularly limited as long as they are various materials which can be charged and discharged, and examples thereof include those containing at least one of (A) lithium transition metal composite oxide containing at least one or more metals of nickel, manganese and cobalt and having a layered structure, (B) lithium-manganese composite oxide having a spinel structure, (C) lithium-containing olivine-type phosphate, and (D) lithium rich layered transition metal oxide having a layered rock salt structure.

### ((A) Lithium transition metal composite oxide)

### Positive electrode active material (A)

Examples of the lithium transition metal composite oxide containing at least one or more metals of nickel, manganese and cobalt and having a layered structure include lithium-cobalt composite oxide, lithium-nickel composite oxide, lithium-nickel-cobalt composite oxide, lithium-nickel-cobalt-aluminum composite oxide, lithium-cobalt-manganese composite oxide, lithium-nickel-manganese composite oxide, lithium-nickel-manganese-cobalt composite oxide and the like. In addition, those substances obtained by substituting a part of transition metal atoms included as a main component of these lithium transition metal composite oxides by other elements such as Al, Ti, V, Cr, Fe, Cu, Zn, Mg, Ga, Zr, Si, B, Ba, Y, Sn may be used.

As specific examples of the lithium-cobalt composite oxide and lithium-nickel composite oxide, LiCoO₂, LiNiO₂, lithium cobaltate to which another element such as Mg, Zr, Al and Ti is added (such as LiCo_{0.98}Mg_{0.01}Zr_{0.01}O₂, LiCo_{0.98}Mg_{0.01}Al_{0.01}O₂, LiCo_{0.975}Mg_{0.01}Zr_{0.005}Al_{0.01}O₂), lithium cobaltate having a rare-earth compound fixed on the surface thereof described in WO2014/034043, and the like may be also used. In addition, LiCoO₂ particle powder of which particle surface is partially covered with aluminum oxide may be also used as described in e.g. JP-A-2002-151077.

The lithium-nickel-cobalt composite oxide or lithium-nickel-cobalt-aluminum composite oxide is represented by the general formula [11]:

LiₐNi_{1-b-c}Co_{b}M¹_{c}O₂ [11] .

In the formula [11], M¹ is at least one element selected from the group consisting of Al, Fe, Mg, Zr, Ti and B, and the conditions that a is 0.9 ≤ a ≤ 1.2 and b and c are 0.1 ≤ b ≤ 0.3 and 0 ≤ c ≤ 0.1 are satisfied.

They can be prepared, for example, in accordance with production methods described in e.g. JP-A-2009-137834, and the like. Specific examples thereof include LiNi_{0.8}Co_{0.2}O₂, LiNi_{0.85}Co_{0.10}Al_{0.05}O₂, LiNi_{0.87}Co_{0.10}Al_{0.03}O₂, LiNi_{0.6}Co_{0.3}Al_{0.1}O₂ and the like.

Specific examples of the lithium-cobalt-manganese composite oxide, and lithium-nickel-manganese composite oxide include LiNi_{0.5}Mn_{0.5}O₂, LiCo_{0.5}Mn_{0.5}O₂ and the like. Examples of the lithium-nickel-manganese-cobalt composite oxide include lithium-containing composite oxide represented by the general formula [12]:

Li_{d}NiₑMn_{f}Co_{g}M²ₕO₂ [12]

.

In the formula [12], M² is at least one element selected from the group consisting of Al, Fe, Mg, Zr, Ti, B and Sn, and the conditions that d is 0.9 ≤ d ≤ 1.2 and e, f, g and h are e + f + g + h = 1, 0 ≤ e ≤ 0.9, 0 ≤ f ≤ 0.5, 0 ≤ g ≤ 0.5 and h ≥ 0 are satisfied.

As the lithium-nickel-manganese-cobalt composite oxide, substances which contain manganese in a range shown in the general formula [12]are preferred to increase structure stability and improve the safety of lithium secondary batteries at high temperatures, and substances which further contain cobalt in a range shown in the general formula [12] are more preferred particularly to increase the high-rate characteristics of lithium ion secondary batteries.

Specific examples thereof include Li[Ni_{1/3}Mn_{1/3}Co_{1/3}]O₂, Li[Ni_{0.45}Mn_{0.35}Co_{0.2}]O₂, Li[Ni_{0.5}Mn_{0.3}Co_{0.2}]O₂,Li[Ni_{0.6}Mn_{0.2}CO_{0.2}]O₂, Li [Ni_{0.49}Mn_{0.3}Co_{0.2}Zr₀.₀₁]O₂, Li[Ni_{0.49}Mn_{0.3}Co_{0.2}Mg_{0.1}]O₂, Li[Ni_{0.8}Mn_{0.1}Co_{0.1}]O₂ and the like, which have charge and discharge regions of e.g. 4.3 V or more.

### ((B) Lithium-manganese composite oxide having spinel structure)

### Positive electrode active material (B)

Examples of the lithium-manganese composite oxide having a spinel structure include a spinel type lithium-manganese composite oxide represented by the general formula [13]:

Liⱼ(Mn₂₋ₖM³ₖ)O₄ [13]

.

In formula [13], M³ is at least one metal element selected from the group consisting of Ni, Co, Fe, Mg, Cr, Cu, Al and Ti, and j is 1.05 ≤ j ≤ 1.15 and k is 0 ≤ k ≤ 0.20.

Specific examples thereof include LiMnO₂, LiMn₂O₄, LiMn_{1.95}Al_{0.05}O₄, LiMn_{1.9}Al_{0.1}O₄, LiMn_{1.9}Ni_{0.1}O₄, LiMn_{1.5}Ni_{0.5}O₄ and the like.

### ((C) Lithium-containing olivine-type phosphate)

### Positive electrode active material (C)

Examples of the lithium-containing olivine-type phosphate include those represented by the general formula [14]:

LiFe₁₋ₙM⁴ₙPO₄ [14]

.

In formula [14], M⁴ is at least one selected from Co, Ni, Mn, Cu, Zn, Nb, Mg, Al, Ti, W, Zr and Cd, and n is 0 ≤ n ≤ 1.

Specific examples thereof include LiFePO₄, LiCoPO₄, LiNiPO₄, LiMnPO₄ and the like, and among them, LiFePO₄ and/or LiMnPO₄ is preferred.

### ((D) Lithium rich layered transition metal oxide)

### Positive electrode active material (D)

Examples of the lithium rich layered transition metal oxide having a layered rock salt structure include those represented by the general formula [15]:

xLiM⁵O₂·(1-x)Li₂M⁶O₃ [15].

In formula [15], x is a number satisfying 0 < x < 1, M⁵ is at least one or more metal elements having an average oxidation number of 3⁺, and M⁶ is at least one metal element having an average oxidation number of 4⁺. In formula [15], M⁵ is preferably one metal element selected from trivalent Mn, Ni, Co, Fe, V and Cr; however, the average oxidation number may be made trivalent by equal amounts of divalent and tetravalent metals.

In addition, in formula [15], M⁶ is preferably one or more metal elements selected from Mn, Zr and Ti. Specific examples thereof include 0.5[LiNi_{0,5}Mn_{0,5}O₂] ·0.5[Li₂MnO₃], 0.5[LiNi_{1/3}Co_{1/3}Mn_{1/3}O₂] ·0.5[Li₂MnO₃], 0.5[LiNi_{0.375}Co_{0.25}Mn_{0.375}O₂] ·0.5[Li₂MnO₃], 0.5[LiNi_{0.375}Co_{0.125}Fe_{0.125}Mn_{0.375}O₂] ·0.5[Li₂MnO₃], 0.45[LiNi_{0.375}Co_{0.25}Mn_{0.375}O₂] ·0.10[Li₂TiO₃]·0.45[Li₂MnO₃] and the like.

It is known that the positive electrode active material (D) represented by the general formula [15] indicates high capacity by charge at a high voltage of 4.4 V or more (based on Li) (e.g. US Patent No. 7,135,252).

These positive electrode active materials can be prepared, for example, in accordance with production methods described in e.g. JP-A-2008-270201, WO2013/118661, JP-A-2013-030284, and the like.

It is sufficient that the positive electrode active material contains at least one selected from the above (A) to (D) as the main component, and examples of components other than the above include transition element chalcogenides such as FeS₂, TiS₂, TiO₂, V₂O₅, MoO₃ and MoS₂ or conductive polymers such as polyacetylene, polyparaphenylene, polyaniline, and polypyrrole, activated carbons, polymers which generate a radical, carbon materials and the like.

### [Positive electrode current collector]

The positive electrode (b) has a positive electrode current collector. As the positive electrode current collector, for example, aluminum, stainless steel, nickel, titanium or an alloy thereof can be used.

### [Positive electrode active material layer]

In the positive electrode(b), a positive electrode active material layer is formed, for example, on at least one surface of the positive electrode current collector. The positive electrode active material layer is formed, for example, by the above-described positive electrode active material, a binding agent, and, as needed, a conducting agent.

Examples of the binding agent include polytetrafluoroethylene, polyvinylidene fluoride, a tetrafluoroethylene-perfluoroalkyl vinyl ether copolymer, styrene butadiene rubber (SBR), carboxymethyl cellulose or a salt thereof, methyl cellulose or a salt thereof, cellulose acetate phthalate or a salt thereof, hydroxypropyl methylcellulose or a salt thereof, polyvinyl alcohol or a salt thereof and the like.

As the conducting agent, for example, carbon materials such as acetylene black, ketjenblack, furnace black, carbon fibers, graphite (granular graphite and flake graphite), and fluorinated graphite can be used. For positive electrodes, acetylene black and ketjenblack with low crystallinity are preferably used.

### <(c) Negative electrode>

The negative electrode material is not particularly limited, and, in the case of lithium batteries and lithium ion batteries, lithium metal, an alloy of lithium metal and another metal, an intermetallic compound, various carbon materials (such as artificial graphite and natural graphite), a metal oxide, a metal nitride, tin (elemental metal), a tin compound, silicon (elemental metal), a silicon compound, activated carbon, a conductive polymer and the like are used.

The carbon materials are, for example, graphitizable carbon, non-graphitizable carbon (hard carbon) with a (002) plane spacing of 0.37 nm or more, graphite with a (002) plane spacing of 0.34 nm or less, and the like, and more specifically are pyrolytic carbon, cokes, glassy carbon fibers, burned substances of organic polymer compounds, activated carbons or carbon blacks, and the like. Among them, the cokes include pitch coke, needle coke or petroleum coke and the like. The burned substances of organic polymer compounds indicate substances carbonized by burning e.g. phenol resin and furan resin at a suitable temperature. Carbon materials have very small changes in crystal structure associated with the occlusion and release of lithium and thus high energy density and also excellent cycle characteristics are obtained. In this respect, the carbon materials are preferred. In this connection, the carbon materials may be in the shape of a fiber, globe, grain or scale. In addition, amorphous carbon and graphite materials the surface of which is covered with amorphous carbon are more preferred because the reactivity between a material surface and a nonaqueous electrolyte solution becomes low.

The negative electrode (c) preferably includes at least one negative electrode active material.

### [Negative electrode active material]

In the case of lithium ion secondary batteries wherein the cation in a nonaqueous electrolyte solution is mainly lithium, the negative electrode active materials to constitute a negative electrode (c) are those which can be doped and dedoped with lithium ion. Examples thereof include those comprising at least one selected from (E) a carbon material with a d value of a lattice plane (002 plane) of 0.340 nm or less by X-ray diffraction, (F) a carbon material with d value of a lattice plane (002 plane) of above 0.340 nm by X-ray diffraction, (G) an oxide of one or more metals selected from Si, Sn and Al, (H) one or more metals selected from Si, Sn and Al or an alloy including these metals, or an alloy of these metals or their alloys with lithium, and (I) lithium titanium oxide. These negative electrode active materials can be used individually or two or more of these materials can be used in combination.

### ((E) Carbon material with a d value of a lattice plane (002 plane) of 0.340 nm or less by X-ray diffraction)

### Negative electrode active material (E)

Examples of the carbon material with d value of a lattice plane (002 plane) of 0.340 nm or less by X-ray diffraction include pyrolytic carbon, cokes (such as e.g. pitch coke, needle coke and petroleum coke), graphite, burned substances of organic polymer compounds (e.g. substances carbonized by burning e.g. phenol resin and furan resin at a suitable temperature), carbon fibers, activated carbons and the like, and these may be those which are graphitized. The carbon materials are those which have a d value of a

(002) plane (d002) of 0.340 nm or less measured by X-ray diffraction, and among them, graphite with a true density of 1.70 g/cm³ or more or a high crystallinity carbon material having properties close to those of the graphite is preferred.

### ((F) Carbon material with a d value of a lattice plane (002 plane) of above 0.340 nm by X-ray diffraction)

### Negative electrode active material (F)

Examples of the carbon material with a d value of a lattice plane (002 plane) of above 0.340 nm by X-ray diffraction include amorphous carbon, and this is a carbon material in which the stacking order hardly changes even when heat treatment is carried out at a high temperature of 2000°C or higher. Examples thereof are non-graphitizable carbon (hard carbon), meso-carbon microbeads (MCMB) burned at 1500°C or lower, mesophase pitch carbon fiber (MCF) and the like. Typical examples thereof are Carbotron (registered trademark) P manufactured by KUREHA CORPORATION, and the like.

### ((G) Oxide of one or more metals selected from Si, Sn and Al)

### Negative electrode active material (G)

Examples of the oxide of one or more metals selected from Si, Sn and Al include silicon oxide, tin oxide and the like which can be doped and dedoped with lithium ion.

There are also SiOₓ having a structure in which Si ultrafine particles are dispersed in SiO₂, and the like. When this material is used as a negative electrode active material, a battery is smoothly charged and discharged because Si reacting with Li is in the shape of ultrafine particles, while because SiOₓ particles themselves having the above structure have small surface areas, the paint properties of a composition (paste) to form a negative electrode active material layer and the adhesive properties of a negative electrode mixture layer to a current collector are also good.

In this connection, SiOₓ has a large change in volume associated with charge and discharge and accordingly both high capacity and good charge and discharge cycle characteristics can be obtained by using both SiOₓ and graphite as the above-described negative electrode active material (E), at a specific ratio for a negative electrode active material.

### ((H) one or more metals selected from Si, Sn and Al or an alloy including these metals, or an alloy of these metals or their alloys with lithium)

### Negative electrode active material (H)

Examples of the one or more metals selected from Si, Sn and Al or the alloy including these metals, or the alloy of these metals or their alloys with lithium include metals such as silicon, tin and aluminum, a silicon alloy, a tin alloy, an aluminum alloy and the like. These metals and alloys are alloyed with lithium associated with charge and discharge and materials thus obtained may be also used.

Preferred specific examples thereof include elemental metals such as silicon (Si) and tin (Sn) (e.g. in powder form), alloys of the metals, compounds containing the metals, alloys including tin (Sn) and cobalt (Co) in the metals, and the like described in e.g. WO2004/100293, and JP-A-2008-016424. Such metals are preferred in that when they are used for electrodes, high charge capacity can be obtained, and the volume expansion and contraction associated with charge and discharge are relatively less. In addition, they are preferred in that it is known that when these metals are used for the negative electrodes of lithium ion secondary batteries, they form alloys with Li at the time of charge to provide high charge capacity.

Furthermore, for example, a negative electrode active material formed from a silicon pillar with a sub-micron diameter, a negative electrode active material including fibers formed by silicon, and the like described in e.g. WO2004/042851 and WO2007/083155 may be used.

### ((I) Lithium titanium oxide)

### Negative electrode active material (I)

Examples of the lithium titanium oxide can include lithium titanate having a spinel structure, lithium titanate having a ramsdellite structure, and the like.

Examples of the lithium titanate having a spinel structure can include Li_{4+α}Ti₅O₁₂ (α changes within a range of 0 ≤ a ≤ 3 by charge and discharge reactions). In addition, examples of the lithium titanate having a ramsdellite structure can include Li_{2+β}Ti₃O₇ (β changes within a range of 0 ≤ b ≤ 3 by charge and discharge reactions). These negative electrode active materials can be prepared, for example, in accordance with production methods described in e.g. JP-A-2007-018883, and JP-A-2009-176752, and the like.

Meanwhile, in the case of sodium ion secondary batteries wherein the cation in a nonaqueous electrolyte solution is mainly sodium, hard carbon, oxides such as TiO₂, V₂O₅ and MoO₃, and the like are used as a negative electrode active material. In the case of sodium ion secondary batteries wherein the cation in a nonaqueous electrolyte solution is mainly sodium, for example, sodium-containing transition metal composite oxide such as NaFeO₂, NaCrO₂, NaNiO₂, NaMnO₂ and NaCoO₂, these sodium-containing transition metal composite oxides comprising a plurality of transition metals such as Fe, Cr, Ni, Mn and Co, substances obtained by substituting a part of the transition metals in these sodium-containing transition metal composite oxides by another metal other than transition metals, phosphoric acid compounds of transition metals such as Na₂FeP₂O₇ and NaCo₃(PO₄)₂P₂O₇, sulfides such as TiS₂ and FeS₂, or conductive polymers such as polyacetylene, polyparaphenylene, polyaniline and polypyrrole, activated carbons, polymers which generate a radical, carbon materials and the like are used as a positive electrode active material.

### [Negative electrode current collector]

The negative electrode (c) has a negative electrode current collector. As the negative electrode current collector, for example, copper, stainless steel, nickel, titanium or an alloy thereof or the like can be used.

### [Negative electrode active material layer]

In the negative electrode (c), a negative electrode active material layer is formed, for example, on at least one surface of the negative electrode current collector. The negative electrode active material layer is formed from, for example, the above-described negative electrode active material, a binding agent, and, as needed, a conducting agent.

Examples of the binding agent include polytetrafluoroethylene, polyvinylidene fluoride, a tetrafluoroethylene-perfluoroalkyl vinyl ether copolymer, styrene butadiene rubber (SBR), carboxymethyl cellulose or a salt thereof, methyl cellulose or a salt thereof, cellulose acetate phthalate or a salt thereof, hydroxypropyl methylcellulose or a salt thereof, polyvinyl alcohol or a salt thereof, and the like.

As the conducting agent, for example, carbon materials such as acetylene black, ketjenblack, furnace black, carbon fibers, graphite (granular graphite and flake graphite), and fluorinated graphite can be used.

### [Method for producing electrodes (positive electrode (b) and negative electrode(c))]

An electrode can be obtained, for example, by dispersing an active material, a binding agent, and, as needed, a conducting agent in a solvent such as N-methyl-2-pyrrolidone (NMP) or water in predetermined mixing amounts and kneading the resultant mixture, applying the resultant paste onto a current collector and drying the paste to form an active material layer. The resultant electrode is preferably adjusted to have a suitable density by compression with a method such as roll pressing.

### <(d) Separator>

The above nonaqueous electrolyte battery can be provided with a separator (d). As a separator to prevent the contact of the positive electrode (b) and negative electrode (c), polyolefin such as polypropylene and polyethylene, and moreover cellulose, paper, or nonwoven fabric formed from e.g. glass fiber, a porous sheet and the like are used. These films or sheets are preferably those which are microporous so that a nonaqueous electrolyte solution soaks into them and ions are easy to permeate them.

Examples of the polyolefin separator include a microporous polymer film such as a porous polyolefin film, which electrically insulates the positive electrode and negative electrode and through which lithium ion can penetrate. As specific examples of the porous polyolefin film, for example, a porous polyethylene film alone, or a multilayered film obtained by laminating a porous polyethylene film and a porous polypropylene film may be used. In addition, examples thereof include a film in which a porous polyethylene film and a polypropylene film are conjugated, and the like.

### [Packaging]

When forming a nonaqueous electrolyte battery, for example, a coin-type, cylindrical or square metal can, or laminate packaging can be used as the packaging of the nonaqueous electrolyte battery. Examples of the metal can material include a steel plate plated with nickel, a stainless steel plate, a stainless steel plate plated with nickel, aluminum or an alloy thereof, nickel, titanium, and the like.

As the laminate packaging, for example, laminate films such as an aluminum laminate film, an SUS laminate film, polypropylene coated with silica, and polyethylene and the like can be used.

The constitution of the nonaqueous electrolyte battery according to the present embodiment is not particularly limited, and the nonaqueous electrolyte battery can be, for example, constituted such that electrode elements comprising a positive electrode and a negative electrode which are arranged opposite to each other, and a nonaqueous electrolyte solution are incorporated into a package. The shape of the nonaqueous electrolyte battery is not particularly limited, and an electrochemical device in a shape of e.g. coin, cylinder, square or aluminum laminate sheet is assembled from the above elements.

### Examples

The present invention will now be described in more detail by way of examples. However, the scope of the present invention is not limited to these descriptions in any way.

### [Preparation of nonaqueous electrolyte solutions according to Examples and Comparative Examples]

### <Example 1-1>

### (Preparation of nonaqueous electrolyte solution 1-1)

In a mixed solvent of ethylene carbonate (hereinafter "EC"), propylene carbonate (hereinafter "PC"), dimethyl carbonate (hereinafter "DMC") and ethylmethyl carbonate (hereinafter "EMC") at a volume ratio of 2 : 1 : 3 : 4 as a nonaqueous organic solvent, lithium hexafluorophosphate (hereinafter "LiPF₆") as a solute and a compound represented by the above formula (1-1) as the compound represented by the general formula (1) were dissolved so that the concentrations of the solute and the compound were 1.0 mol/L and 0.05 mass%, respectively, with respect to the total amount of the nonaqueous electrolyte solution to obtain a nonaqueous electrolyte solution 1-1. In this case, the above preparation was carried out with the liquid temperature maintained at 25°C.

In this connection, the compound represented by the formula (1-1) was obtained by the ion exchange reaction of a substance obtained by reacting 4-hydroxy-1,2-oxathiolane-2,2-dioxide with sulfuryl fluoride isocyanate, with the corresponding cation species.

### <Examples 1-2 to 1-38>

### (Preparation of nonaqueous electrolyte solutions 1-2 to 1-38)

The nonaqueous electrolyte solutions 1-2 to 1-38 were prepared in the same procedure as in the preparation of the above nonaqueous electrolyte solution 1-1 except that the types and the concentrations of the compounds represented by the general formula (1) were changed as shown in Table 1.

In this connection, the compounds represented by the general formula (1) used in respective Examples were obtained by the ion exchange reaction of a substance obtained by reacting the corresponding hydroxy cyclic sulfonic acid ester or hydroxy cyclic carboxylic acid ester with the corresponding isocyanate, with the corresponding cation species, or by reacting the corresponding hydroxy cyclic sulfonic acid ester or hydroxy cyclic carboxylic acid ester with the corresponding phosphoryl chloride or sulfonyl chloride in the presence of an organic base or inorganic base.

### <Comparative Example 1-1>

### (Preparation of comparative nonaqueous electrolyte solution 1-1)

The comparative nonaqueous electrolyte solution 1-1 was prepared in the same procedure as in the preparation of the nonaqueous electrolyte solution 1-1 except that the compound represented by the general formula (1) was not added.

### <Comparative Examples 1-2 to 1-3>

### (Preparation of comparative nonaqueous electrolyte solutions 1-2 to 1-3)

The comparative nonaqueous electrolyte solutions 1-2 to 1-3 were prepared in the same procedure as in the preparation of the above nonaqueous electrolyte solution 1-4 except that the compound represented by the general formula (1) was changed to compounds No. 11-1 to 11-2. In this connection, the compound No. 11-1 is a commercial product (manufactured by KISHIDA CHEMICAL Co., Ltd.) and the compound No. 11-2 was obtained by reacting 3-hydroxytetrahydrothiophene-1,1-dioxide with methanesulfonyl chloride in the presence of triethanolamine.

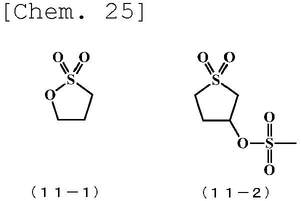

### [Production of nonaqueous electrolyte battery]

### (Production of NCM811 positive electrode)

To 91.0 mass% of LiNi_{0.8}Mn_{0.1}CO_{0.1}O₂ powder, 4.5 mass% of polyvinylidene fluoride (hereinafter PVDF) as a binder, and 4.5 mass% of acetylene black as a conducting material were mixed, and N-methyl-2-pyrrolidone (hereinafter NMP) was further added thereto to produce a positive electrode mixed paste. This paste was applied onto both sides of aluminum foil (A1085), dried and pressed, and then punched at a size of 4 × 5 cm to obtain a NCM811 positive test electrode.

### (Production of graphite negative electrode)

To 92.0 mass% of artificial graphite powder, 8.0 mass% of PVDF was mixed as a binder, and NMP was further added thereto to produce a negative electrode mixed paste. This paste was applied onto one surface of copper foil, dried and pressed, and then punched at a size of 4 × 5 cm to obtain a graphite negative test electrode.

### (Production of nonaqueous electrolyte battery)

A cell packaged with aluminum laminate (volume 30 mAh), having the above NCM811 positive test electrode, the above graphite negative test electrode and a cellulose separator, was impregnated with each of the nonaqueous electrolyte solutions 1-1 to 1-38, and comparative nonaqueous electrolyte solutions 1-1 to 1-3 shown in Table 1 to obtain nonaqueous electrolyte batteries according to Examples 1-1 to 1-38, and Comparative Examples 1-1 to 1-3.

### [Evaluation]

The nonaqueous electrolyte batteries of Examples 1-1 to 1-38 and Comparative Examples 1-1 to 1-3 were evaluated as follows.

### <Initial direct current internal resistance>

First, the resultant cells were conditioned at an environmental temperature of 25°C under the following conditions. That is, a charge and discharge cycle: constant current-constant voltage charge with an upper charge voltage limit of 4.3 V at 0.1 C rate (3 mA), constant current discharge at 0.2 C rate (6 mA) until a discharge end voltage of 3.0 V, then constant current-constant voltage charge with an upper charge voltage limit of 4.3 V at 0.2 C rate (6 mA), and constant current discharge at 0.2 C rate (6 mA) until a discharge end voltage of 3.0 V, was repeated three times as the initial charge and discharge.

After the above conditioning, constant current charge was carried out at an environment temperature of 25°C at 0.2 C rate for 150 minutes, and constant current discharge was carried out at predetermined current values (0.2 C, 0.5 C, 1.0 C, 2.0 C, 5.0 C) for 10 seconds. The voltage at the 10th second was measured and plotted against current values. The least-square method was applied to each plot to find an approximate line. The value of the slope of the approximate line was used as the initial direct current internal resistance.

### <Discharge capacity after storage at high temperatures (-20°C)>

After the above conditioning, constant current-constant voltage charge at 0.2 C rate (6 mA) until an upper charge voltage limit of 4.3 V, and constant current discharge at 0.2 C rate (6 mA) at an environmental temperature of - 20°C until a discharge end voltage of 3.0 V were carried out to find the initial discharge capacity at -20°C. The discharge capacity at this time is used as discharge capacity a.

Subsequently, after constant current-constant voltage charge at 0.2 C rate (6 mA) at an environmental temperature of 25°C until an upper charge voltage limit of 4.3 V, this cell was stored at an environmental temperature of 60°C for 10 days. Constant current discharge was then carried out at 0.2 C rate (6 mA) at an environmental temperature of 25°C until a discharge end voltage of 3.0 V.

Next, constant current-constant voltage charge at 0.2 C rate (6 mA) until an upper charge voltage limit of 4.3 V, and constant current discharge at 0.2 C rate (6 mA) at an environmental temperature of -20°C until a discharge end voltage of 3.0 V were carried out to find a -20°C discharge capacity after storage at high temperatures. The discharge capacity at this time is used as discharge capacity β.

The low-temperature output characteristics after storage at high temperatures were found from the -20°C discharge capacity retention rate (%) after storage at high temperatures. The -20°C discharge capacity retention rate (%) after storage at high temperatures herein is calculated by "(discharge capacity β/discharge capacity α) × 100."

The results are shown in Table 1. in this case, each evaluation result is determined as a relative value when the result of Comparative Example 1-1 is considered 100.

**[Table 1]**

| | Nonaqueous electrolyte solution | Compound represented by general formula (1) | | | Initial internal resistance | Discharge capacity retention rate after storage at high temperatures |
|---|---|---|---|---|---|---|
| | | Type | | Added amount [mass%] | | |
| | | Formula | M | | | |
| Example 1-1 | Nonaqueous electrolyte solution 1-1 | 1-1 | Li⁺ | 0.05 | 98 | 111 |
| Example 1-2 | Nonaqueous electrolyte solution 1-2 | | | 0.1 | 96 | 113 |
| Example 1-3 | Nonaqueous electrolyte solution 1-3 | | | 0.5 | 92 | 116 |
| Example 1-4 | Nonaqueous electrolyte solution 1-4 | | | 1.0 | 88 | 121 |
| Example 1-5 | Nonaqueous electrolyte solution 1-5 | | | 2.0 | 89 | 123 |
| Example 1-6 | Nonaqueous electrolyte solution 1-6 | | H⁺ | 1.0 | 88 | 119 |
| Example 1-7 | Nonaqueous electrolyte solution 1-7 | | Na⁺ | 1.0 | 89 | 120 |
| Example 1-8 | Nonaqueous electrolyte solution 1-8 | | K⁺ | 1.0 | 89 | 119 |
| Example 1-9 | Nonaqueous electrolyte solution 1-9 | | (C₂H₅)₄N⁺ | 1.0 | 90 | 118 |
| Example 1-10 | Nonaqueous electrolyte solution 1-10 | | (C₂H₅)₄P⁺ | 1.0 | 90 | 119 |
| Example 1-11 | Nonaqueous electrolyte solution 1-11 | 1-2 | Li+ | 1.0 | 89 | 120 |
| Example 1-12 | Nonaqueous electrolyte solution 1-12 | 1-6 | Li⁺ | 1.0 | 92 | 123 |
| Example 1-13 | Nonaqueous electrolyte solution 1-13 | 1-9 | Li+ | 1.0 | 94 | 120 |
| Example 1-14 | Nonaqueous electrolyte solution 1-14 | 1-11 | Li+ | 1.0 | 87 | 119 |
| Example 1-15 | Nonaqueous electrolyte solution 1-15 | 1-12 | Li⁺ | 1.0 | 95 | 118 |
| Example 1-16 | Nonaqueous electrolyte solution 1-16 | 1-15 | Li+ | 1.0 | 88 | 119 |
| Example 1-17 | Nonaqueous electrolyte solution 1-17 | 1-16 | Li+ | 1.0 | 87 | 121 |
| Example 1-18 | Nonaqueous electrolyte solution 1-18 | 1-18 | Li⁺ | 1.0 | 91 | 120 |
| Example 1-19 | Nonaqueous electrolyte solution 1-19 | 2-1 | | 0.1 | 94 | 112 |
| Example 1-20 | Nonaqueous electrolyte solution 1-20 | | | 0.5 | 89 | 116 |
| Example 1-21 | Nonaqueous electrolyte solution 1-21 | | | 1.0 | 86 | 119 |
| Example 1-22 | Nonaqueous electrolyte solution 1-22 | 2-3 | | 1.0 | 86 | 120 |
| Example 1-23 | Nonaqueous electrolyte solution 1-23 | 2-5 | | 1.0 | 90 | 121 |
| Example 1-24 | Nonaqueous electrolyte solution 1-24 | 3-1 | Li+ | 0.1 | 96 | 111 |
| Example 1-25 | Nonaqueous electrolyte solution 1-25 | | | 0.5 | 93 | 114 |
| Example 1-26 | Nonaqueous electrolyte solution 1-26 | | | 1.0 | 89 | 116 |
| Example 1-27 | Nonaqueous electrolyte solution 1-27 | 4-1 | Li+ | 0.1 | 95 | 112 |
| Example 1-28 | Nonaqueous electrolyte solution 1-28 | | | 0.5 | 92 | 116 |
| Example 1-29 | Nonaqueous electrolyte solution 1-29 | | | 1.0 | 90 | 119 |
| Example 1-30 | Nonaqueous electrolyte solution 1-30 | 6-1 | Li+ | 0.1 | 97 | 110 |
| Example 1-31 | Nonaqueous electrolyte solution 1-31 | | | 0.5 | 93 | 113 |
| Example 1-32 | Nonaqueous electrolyte solution 1-32 | | | 1.0 | 91 | 117 |
| Example 1-33 | Nonaqueous electrolyte solution 1-33 | 7-1 | | 0.1 | 96 | 111 |
| Example 1-34 | Nonaqueous electrolyte solution 1-34 | | | 0.5 | 91 | 116 |
| Example 1-35 | Nonaqueous electrolyte solution 1-35 | | | 1.0 | 87 | 119 |
| Example 1-36 | Nonaqueous electrolyte solution 1-36 | 7-4 | | 0.1 | 98 | 110 |
| Example 1-37 | Nonaqueous electrolyte solution 1-37 | | | 0.5 | 95 | 115 |
| Example 1-38 | Nonaqueous electrolyte solution 1-38 | | | 1.0 | 91 | 118 |
| Comparative Example 1-1 | Comparativenonaq ueous electrolyte solution 1-1 | - | | | 100 | 100 |
| Comparative Example 1-2 | Comparativenonaq ueous electrolyte solution 1-2 | 11-1 | | 1.0 | 107 | 105 |
| Comparative Example 1-3 | Comparativenonaq ueous electrolyte solution 1-3 | 11-2 | | 1.0 | 108 | 107 |

Compared with the above results, it was confirmed that the initial internal resistance was lower and the low-temperature output characteristics after storage at high temperatures were better than Comparative Examples 1-1 to 1-3 by using a compound represented by general formula (1).

The compounds represented by formulae (1-1), (1-2), (1-11), (1-15), (1-16), (2-1), (2-3), (2-5), (3-1), (4-1) and (7-1) are further preferred from a viewpoint of internal resistance reduction after the initial charge and discharge, the compounds represented by formulae (1-1), (1-2), (1-6), (1-9), (1-16), (1-18), (2-3), (2-5) and (4-1) are further preferred from a viewpoint of improving low-temperature output characteristics after storage at high temperatures, and the compounds represented by formulae (1-1), (1-16), (2-1), (2-3), (3-1) and (4-1) are particularly preferred from a viewpoint of displaying the above two effects in a well-balanced manner.

## Claims

1. A nonaqueous electrolyte solution, **characterized by** comprising a compound represented by the general formula (1) below, a solute, and a nonaqueous organic solvent: 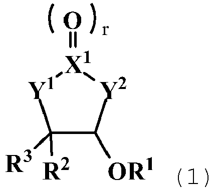
wherein, in the general formula (1),
X¹ represents a carbon atom or a sulfur atom,
Y¹ and Y² represent oxygen atoms or methylene groups which are optionally substituted by a halogen atom,
r represents 1 in the case where X¹ represents a carbon atom, 1 in the case where X¹ represents a sulfur atom and Y¹ and Y² represent oxygen atoms, and 2 in the other cases,
R¹ represents a group represented by the general formula (2) below or a group represented by the general formula (3) below, provided that:
(i) in the case where X¹ represents a sulfur atom and Y¹ and Y² represent methylene groups and (ii) in the case where X¹ represents a carbon atom and Y¹ and Y² represent oxygen atoms, R¹ represents a group represented by the general formula (2), and
R² and R³ each independently represents a hydrogen atom, a halogen atom, an alkyl group having 1-20 carbon atoms which is optionally substituted by a halogen atom, an alkenyl group having 2-20 carbon atoms which is optionally substituted by a halogen atom, an alkynyl group having 2-20 carbon atoms which is optionally substituted by a halogen atom, an alkoxy group having 1-20 carbon atoms which is optionally substituted by a halogen atom, a cycloalkyl group having 5-20 carbon atoms which is optionally substituted by a halogen atom, an aryl group having 6-40 carbon atoms which is optionally substituted by a halogen atom, or a heteroaryl group having 2-40 carbon atoms which is optionally substituted by a halogen atom: 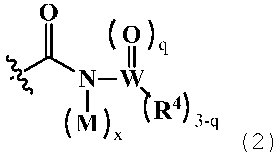
wherein, in the general formula (2),
M represents a hydrogen atom, an alkali metal ion, an alkaline earth metal ion, or a monovalent or divalent onium ion, and in the case where M represents an alkali metal ion, an alkaline earth metal ion, or a monovalent or divalent onium ion, a bond between a nitrogen atom and M in the general formula (2) represents an ionic bond,
x represents 1 in the case where M represents a hydrogen atom, an alkali metal ion, or a monovalent onium ion, and 0.5 in the case where M represents an alkaline earth metal ion or a divalent onium ion,
W represents a phosphorus atom or a sulfur atom,
q represents 1 in the case where W represents a phosphorus atom, and 2 in the case where W represents a sulfur atom,
R⁴ represents a halogen atom, an alkyl group having 1-20 carbon atoms which is optionally substituted by a halogen atom or an FSO₂ group, a cycloalkyl group having 5-20 carbon atoms which is optionally substituted by a halogen atom or an FSO₂ group, an alkenyl group having 2-20 carbon atoms which is optionally substituted by a halogen atom or an FSO₂ group, an alkynyl group having 2-20 carbon atoms which is optionally substituted by a halogen atom or an FSO₂ group, an aryl group having 6-40 carbon atoms which is optionally substituted by a halogen atom or an FSO₂ group, a heteroaryl group having 2-40 carbon atoms which is optionally substituted by a halogen atom or an FSO₂ group, an alkoxy group having 1-20 carbon atoms which is optionally substituted by a halogen atom or an FSO₂ group, a cycloalkoxy group having 5-20 carbon atoms which is optionally substituted by a halogen atom or an FSO₂ group, an alkenyloxy group having 2-20 carbon atoms which is optionally substituted by a halogen atom or an FSO₂ group, an alkynyloxy group having 2-20 carbon atoms which is optionally substituted by a halogen atom or an FSO₂ group, an aryloxy group having 6-40 carbon atoms which is optionally substituted by a halogen atom or an FSO₂ group, or a heteroaryloxy group having 2-40 carbon atoms which is optionally substituted by a halogen atom or an FSO₂ group, and
a plurality of R⁴s may be the same or different when q = 1: 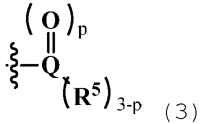
wherein, in the general formula (3),
Q represents a phosphorus atom or a sulfur atom,
p represents 1 in the case where Q represents a phosphorus atom, and 2 in the case where Q represents a sulfur atom,
R⁵ represents a halogen atom, and a plurality of R⁵s may be the same or different when p = 1, and
Q represents a phosphorus atom in the case where, in the general formula (1), X¹ represents a sulfur atom, Y¹ represents an oxygen atom, and Y² represents a methylene group.

2. The nonaqueous electrolyte solution according to claim 1, wherein, in the general formula (1), X¹ represents a sulfur atom, and Y¹ and Y² represent oxygen atoms or methylene groups.

3. The nonaqueous electrolyte solution according to claim 1 or 2, wherein R¹ in the general formula (1) represents a group represented by the general formula (2), and W in the general formula (2) represents a sulfur atom.

4. The nonaqueous electrolyte solution according to claim 1 or 2, wherein, in the general formula (1), Y¹ represents an oxygen atom, Y² represents a methylene group, R¹ represents a group represented by the general formula (3), and Q in the general formula (3) represents a phosphorus atom.

5. The nonaqueous electrolyte solution according to any one of claims 1 to 3, wherein R¹ in the general formula (1) represents a group represented by the general formula (2), and R⁴ in the general formula (2) represents a fluorine atom, a methyl group, an ethyl group, an n-propyl group, an isopropyl group, an n-butyl group, a tert-butyl group, an n-pentyl group, an n-hexyl group, a trifluoromethyl group, a trifluoroethyl group, an ethenyl group, a 2-propenyl group, a 2-propynyl group, a phenyl group, a naphthyl group, a pentafluorophenyl group, a pyrrolyl group, a pyridinyl group, a methoxy group, an ethoxy group, an n-propoxy group, an isopropoxy group, an n-butoxy group, a tert-butoxy group, an n-pentyloxy group, an n-hexyloxy group, a trifluoromethoxy group, a trifluoroethoxy group, an ethenyloxy group, a 2-propenyloxy group, a 2-propynyloxy group, a phenoxy group, a naphthyloxy group, or a pentafluorophenoxy group.

6. The nonaqueous electrolyte solution according to any one of claims 1 to 3 or 5, wherein R¹ in the general formula (1) represents a group represented by the general formula (2), and M in the general formula (2) represents a hydrogen atom, a lithium cation, a sodium cation, a potassium cation, a tetraalkylammonium cation, or a tetraalkylphosphonium cation.

7. The nonaqueous electrolyte solution according to claim 1 or 4, wherein R¹ in the general formula (1) represents a group represented by the general formula (3), and R⁵ in the general formula (3) represents a fluorine atom.

8. The nonaqueous electrolyte solution according to any one of claims 1 to 7, wherein R² and R³ in the general formula (1) are each independently a hydrogen atom, a fluorine atom, a methyl group, an ethyl group, an n-propyl group, an isopropyl group, an n-butyl group, a tert-butyl group, a trifluoromethyl group, a tetrafluoroethyl group, a phenyl group, a naphthyl group, a pentafluorophenyl group, a pyrrolyl group, or a pyridinyl group.

9. The nonaqueous electrolyte solution according to any one of claims 1 to 8, wherein the nonaqueous organic solvent contains at least one selected from a group consisting of a cyclic carbonate and a chain carbonate.

10. The nonaqueous electrolyte solution according to claim 9, wherein the cyclic carbonate is at least one selected from a group consisting of ethylene carbonate, propylene carbonate, and fluoroethylene carbonate, and the chain carbonate is at least one selected from a group consisting of ethylmethyl carbonate, dimethyl carbonate, diethyl carbonate, and methylpropyl carbonate.

11. The nonaqueous electrolyte solution according to any one of claims 1 to 10, wherein the solute is an ionic salt comprising a pair of at least one cation selected from a group consisting of an alkali metal ion and an alkaline earth metal ion, with at least one anion selected from a group consisting of a hexafluorophosphoric acid anion, a tetrafluoroboric acid anion, a trifluoromethanesulfonic acid anion, a fluorosulfonic acid anion, a bis(trifluoromethanesulfonyl)imide anion, a bis(fluorosulfonyl)imide anion, a (trifluoromethanesulfonyl)(fluorosulfonyl)imide anion, a bis(difluorophosphoryl)imide anion, a (difluorophosphoryl)(fluorosulfonyl)imide anion, and a (difluorophosphoryl)(trifluoromethanesulfonyl)imide anion.

12. The nonaqueous electrolyte solution according to claim 11, wherein the cation of the solute is lithium, sodium, potassium, or magnesium, and the anion is at least one selected from a group consisting of a hexafluorophosphoric acid anion, a tetrafluoroboric acid anion, a trifluoromethanesulfonic acid anion, a bis(trifluoromethanesulfonyl)imide anion, a bis(fluorosulfonyl)imide anion, a bis(difluorophosphoryl)imide anion.

13. The nonaqueous electrolyte solution according to any one of claims 1 to 12, wherein the amount of the compound represented by the general formula (1) with respect to a total amount of the compound represented by the general formula (1), the solute, and the nonaqueous organic solvent is 0.01 mass% or more and 10.0 mass% or less.

14. A nonaqueous electrolyte battery, **characterized by** at least comprising the nonaqueous electrolyte solution according to any one of claims 1 to 13, a positive electrode, and a negative electrode having at least one selected from a group consisting of a negative electrode material comprising lithium metal, and a negative electrode material which can occlude and release lithium, sodium, potassium or magnesium.
